# FASCICULE DE BREVET EUROPEEN

(11) **EP 3 241 316 B1**
(45) Date de publication et mention de la délivrance du brevet: **12.02.2020**
(21) Numéro de dépôt: 15817961.4
(22) Date de dépôt: 03.12.2015
(51) Int. Cl.: H04L 12/28, H04L 12/46, H04L 29/12

(54) **METHODE DE COMMUNICATION ENTRE UN GESTIONNAIRE D'ACTION DISTANT ET UN BOITIER DE COMMUNICATION**
VERFAHREN ZUR KOMMUNIKATION ZWISCHEN EINEM FERNAKTIONSMANAGER UND EINER KOMMUNIKATIONSBOX
METHOD OF COMMUNICATION BETWEEN A REMOTE ACTION MANAGER AND A COMMUNICATION BOX

(30) Priorité: 31.12.2014 FR 1463498
(43) Date de publication de la demande: 08.11.2017
(73) Titulaire: BULL SAS, 78340 Les Clayes sous Bois (FR)
(72) Inventeur: JENNEQUIN, Malo, 78490 Galluis (FR); CHEVALIER, Eric, 92000 Nanterre (FR)
(74) Mandataire: Novagraaf Technologies
(86) Numéro de dépôt international: PCT/FR2015/053306
(87) Numéro de publication internationale: WO 2016/107997

(56) Documents cités:
- EP-A2- 2 237 490
- WO-A1-2006/121278
- WO-A1-2008/054270

## Description

L'invention a trait à une méthode de segmentation de données relatives à des équipements utilisateurs, dans un système multi-vendeurs et multiservices, permettant la gestion de données d'un ensemble d'objets ou équipements connectés à un réseau.

Avec l'émergence de l'internet des objets, de plus en plus de services sont proposés aux particuliers et aux professionnels, tels des services relatifs à des domiciles ou des bureaux comprenant des objets connectés. A titre d'exemple, dans un contexte domotique, il est possible via des équipements comprenant des capteurs et des actionneurs, déployés dans une maison et connectés à un réseau, de proposer des services assurant :
- le confort domestique, par exemple permettant
   ∘ d'automatiser et piloter des équipements à partir d'un poste fixe, ou à distance par exemple via une télécommande, un ordinateur portable, un téléphone ;
   ∘ d'automatiser des actions grâce à la géo-localisation, par exemple ouvrir un portail, allumer le chauffage, gérer l'éclairage, activer une alarme ;
- des économies d'énergie, permettant
   ∘ d'éviter le gaspillage en supprimant les dépenses inutiles ;
   ∘ d'assurer un niveau de confort optimal ;
   ∘ de maitriser la consommation d'électricité en optimisant par exemple le chauffage, l'éclairage ou la production d'eau chaude ;
- une protection domiciliaire par des systèmes permettant
   ∘ de superviser des personnes fragiles, âgées ou handicapées ;
   ∘ de surveiller des enfants afin de prévenir tout risque d'accident ;
   ∘ de détecter des intrusions, des chutes, des fuites d'eau, et déclencher une alarme le cas échéant.

Cependant, les systèmes existants proposant ces services présentent divers inconvénients ou limitations :
- les acteurs de l'internet des objets sont nombreux et variés, à titre d'exemples : fabricants, éditeurs, distributeurs, opérateurs de télécommunications, énergéticiens, assureurs. Chacun de ces acteurs monte généralement une offre basée sur un nombre d'équipements, de capteurs et/ou d'actionneurs sélectionnés chez un (autre) fournisseur déterminé. Ceci nécessite donc un travail collaboratif étroit entre l'acteur concerné et les équipes de recherche et développement du fournisseur déterminé, en vue de proposer une solution d'intégration des produits. Certains acteurs de l'internet des objets proposent, quant à eux, une large variété d'équipements connectés, tout en demeurant leur propre développeur de services utilisateurs. Bien que la collaboration avec les équipes de recherche et développement s'en voit alors facilitée, ces acteurs demeurent incapables d'intégrer des équipements de fournisseurs distincts dans leurs plateformes, qui restent propriétaires. Plus généralement, l'ensemble des solutions intégrées dans une même plateforme sont couramment des solutions qui intègrent a priori des équipements de vendeurs déterminés. Les possibilités d'intégrations a posteriori d'équipements, capteurs, actionneurs, restent quant à elles très limitées. Ces possibilités sont en outre dépendantes des caractéristiques des solutions fournisseurs amenées à évoluer, par exemple dépendantes des protocoles propriétaires employés et de leurs évolutions. Par conséquent, ces solutions manquent d'adaptabilité ;
- les équipements, capteurs ou actionneurs connectés des systèmes proposant des services, sont généralement propriétaires, c'est-à-dire se rapportent à un même vendeur/fournisseur. Un boitier de communication, couramment désigné sous l'appellation « *box* », assure alors l'interconnexion des différents équipements, capteurs ou actionneurs avec des plateformes de services ou des réseaux externes. Ainsi, pour différents services fournis par des vendeurs différents, l'utilisateur est souvent obligé d'utiliser un boitier de communication par vendeur, ce qui implique des problèmes d'ergonomie dans son domicile ;
- les équipements propriétaires connectés à un même boitier de communication sont hétérogènes et reposent couramment sur des protocoles de communication différents non-standardisés. Par conséquent, dans le cadre d'un contexte multi-vendeurs, si un équipement change, son protocole de communication change lui aussi fréquemment. Ceci implique une dépendance du boitier vis-à-vis des équipements, le boitier devant alors supporter le nouveau protocole de l'équipement, c'est-à-dire garantir les accès et échanges avec ce nouvel équipement ;
- plusieurs vendeurs peuvent être amenés, avec leurs accords, à proposer des services distincts sur un même boitier. Des services multi-vendeurs sont donc alors exécutés en parallèles sur le même boitier. Ceci n'implique cependant pas de partager l'ensemble des données ou ressources associées à ces services, les vendeurs ne souhaitant par exemple pas partager des données confidentielles. Par ailleurs, l'exécution d'un service doit pouvoir se dérouler indépendamment des autres services exécutés en parallèles, par exemple indépendamment des ressources mémoires utilisées par d'autres services utilisateurs. Ainsi, le dysfonctionnement d'un service ne doit pas impacter les ressources des services voisins. Il existe donc des besoins de « cloisonnement » des services exécutés en parallèles sur un même boitier, particulièrement pour des services utilisateurs issus de vendeurs différents ;
- des fournisseurs en charge de développer des services utilisateurs peuvent vouloir accéder à un ensemble de données fiables en vue, par exemple, de concevoir des services domiciliaires sans nécessairement être un fournisseur d'équipements. Dans un contexte multi-vendeurs et multiservices, il convient notamment de déployer des services sur une plateforme, cette dernière garantissant à la fois un accès à des données fiables provenant d'équipements de vendeurs distincts, et assurer la communication ainsi que le pilotage de ces équipements. Généralement, les fournisseurs d'équipements proposent des équipements avec des possibilités de les piloter à distance, accéder à leurs données, mettre en place des scénarios, et supporter des protocoles (par exemple KNX, Zigbee, Z-Wave). Cependant, les services proposés par ces fournisseurs se limitent au seul équipement, ou ne concernent qu'un seul fournisseur/vendeur. Le fournisseur de services doit par conséquent être un fournisseur d'équipements et ne dispose pas d'accès aux données générées par les équipements multi-vendeurs. Le fournisseur d'équipements dispose donc de données de portée très réduite, limitant fortement les informations utiles à l'élaboration d'un service utilisateur. Notamment, il n'existe actuellement pas de plateforme permettant de regrouper un ensemble de données multi-vendeurs et multiservices, en vue de garantir un accès centralisé à ces données, un pilotage d'équipements multi-vendeurs et la mise en place de scénarios multiservices (ex : déclencher le chauffage en dessous d'une température seuil). La réalisation d'une telle plateforme implique des problèmes techniques concernant la sécurisation des données, leur accès ainsi que la gestion des échanges entre une telle plateforme et les équipements.

Le document WO 2006121278 A1 divulgue un procédé et un appareil de relais d'accès à distance à partir d'un réseau public vers un réseau local, qui utilise un mécanisme de communication basé sur un tunnel via un proxy.

La présente invention a pour but de répondre aux problèmes précités.

A cet effet, il est proposé, selon un premier aspect, une méthode selon la revendication 1 de communication entre un gestionnaire d'action distant et un boitier de communication pour interagir avec un équipement connecté audit boitier de communication.

Lorsque le mécanisme de communication identifié est le mécanisme de communication basé sur un tunnel via un proxy, ou le mécanisme de communication basé sur le protocole de contrôle de dispositif de passerelle internet, la requête d'action est communiquée au boitier via l'adresse publique du dispositif d'accès intégré.

Lorsque le mécanisme de communication identifié est le mécanisme de communication basé sur un tunnel via un proxy, cette méthode comprend, en outre, une étape d'établissement d'un tunnel entre ledit boitier de communication et un serveur proxy associé au gestionnaire d'action distant. Cette étape d'établissement du tunnel comprend une étape d'envoi, par le boitier de communication, d'un message de liaison BIND au serveur proxy pour lui indiquer son identification.

Lorsque le mécanisme de communication identifié est le mécanisme de communication basé sur le protocole de contrôle de dispositif de passerelle internet, cette méthode comprend, en outre, une étape d'auto-déclaration du boitier de communication auprès d'un serveur d'auto-configuration associé audit gestionnaire d'action distant.

Lorsque le mécanisme de communication identifié est le mécanisme de communication utilisant le protocole extensible de présence et de messagerie, ou le mécanisme de communication basé sur le protocole de la traversée simple de datagramme utilisateur à travers une traduction d'adresses réseau, cette méthode comprend, en outre, les étapes suivantes
- suite à la réception d'une requête d'action, envoi, par un serveur de réveil associé au gestionnaire d'action distant, d'un message de réveil audit boitier de communication ;
- suite à la réception du message du réveil, initiation d'une connexion depuis le boitier de communication vers le gestionnaire d'action distant ;
- récupération, par le boitier de communication, de la requête d'action depuis le gestionnaire d'action distant.

Lorsque le mécanisme de communication identifié est le mécanisme de communication utilisant le protocole extensible de présence et de messagerie, cette méthode comprend, en outre, une étape d'établissement d'une connexion selon le protocole extensible de présence et de messagerie entre le boitier de communication et un serveur proxy selon le protocole extensible de présence et de messagerie.

L'invention se rapporte, selon un deuxième aspect, à un produit programme d'ordinateur implémenté sur un support mémoire, susceptible d'être mis en oeuvre au sein d'une unité de traitement informatique et comprenant des instructions pour la mise en oeuvre de la méthode résumée ci-dessus.

D'autres objets et avantages de l'invention apparaîtront à la lumière de la description de modes de réalisation, faite ci-après en référence aux dessins annexés dans lesquels :
- la figure 1 est un diagramme représentant un système de gestion de données multi-vendeurs et multi-services selon un mode de réalisation ;
- la figure 2 est un schéma relationnel de modélisation de données selon un mode de réalisation ;
- la figure 3 est un diagramme de classe d'un nœud du schéma relationnel de modélisation de données selon un mode de réalisation ;
- la figure 4 est un diagramme de classe d'un autre nœud du schéma relationnel de modélisation de données selon un mode de réalisation ;
- la figure 5 est un diagramme topologique décrivant un autre nœud du schéma relationnel de modélisation de données selon un mode de réalisation ;
- la figure 6 est un diagramme topologique décrivant un autre nœud du schéma relationnel de modélisation de données selon un mode de réalisation ;
- la figure 7 est un sous-ensemble topologique décrivant un autre nœud du schéma relationnel de modélisation de données selon un mode de réalisation ;
- la figure 8 est un diagramme illustrant les éléments relatifs à un service selon un mode de réalisation ;
- la figure 9 est un diagramme illustrant la relation entre différents services selon un mode de réalisation ;
- la figure 10 est une figure illustrant un gestionnaire d'actions selon un mode de réalisation ;
- la figure 11 illustre un flux de données relatives à un consommateur d'action selon un mode de réalisation ;
- la figure 12 illustre l'établissement d'un tunnel, pour un mécanisme de communication entre un boitier de communication et un proxy selon un mode de réalisation ;
- la figure 13 illustre la prise en main à distance du boitier de communication pour le mécanisme de communication avec un proxy selon un mode de réalisation ;
- la figure 14 illustre la transmission d'une demande d'action vers un actionneur associé à un équipement pour le mécanisme de communication avec un proxy selon un mode de réalisation ;
- la figure 15 illustre la remontée d'une mesure d'un capteur associé à un équipement pour le mécanisme de communication avec un proxy selon un mode de réalisation ;
- la figure 16 illustre l'établissement d'une connexion entre une plateforme centrale et un boitier de communication pour un mécanisme de communication implémentant le protocole UPnP selon un mode de réalisation ;
- la figure 17 illustre la prise en main à distance du boitier de communication pour le mécanisme de communication implémentant le protocole UPnP selon un mode de réalisation ;
- la figure 18 illustre la transmission d'une demande d'action vers un actionneur associé à un équipement pour le mécanisme de communication implémentant le protocole UPnP selon un mode de réalisation ;
- la figure 19 illustre la remontée d'une mesure d'un capteur associé à un équipement pour le mécanisme de communication implémentant le protocole UPnP selon un mode de réalisation ;
- la figure 20 illustre l'établissement d'une connexion entre une plateforme centrale et un boitier de communication pour un mécanisme de communication implémentant le protocole XMPP selon un mode de réalisation ;
- la figure 21 illustre la prise en main à distance du boitier de communication pour le mécanisme de communication implémentant le protocole XMPP selon un mode de réalisation ;
- la figure 22 illustre la transmission d'une demande d'action vers un actionneur associé à un équipement pour le mécanisme de communication implémentant le protocole XMPP selon un mode de réalisation ;
- la figure 23 illustre la remontée d'une mesure d'un capteur associé à un équipement pour le mécanisme de communication implémentant le protocole XMPP selon un mode de réalisation ;
- la figure 24 illustre l'établissement d'une connexion entre une plateforme centrale et un boitier de communication pour un mécanisme de communication implémentant le protocole STUN selon un mode de réalisation ;
- la figure 25 illustre la prise en main à distance du boitier de communication pour le mécanisme de communication implémentant le protocole STUN selon un mode de réalisation ;
- la figure 26 illustre la transmission d'une demande d'action vers un actionneur associé à un équipement pour le mécanisme de communication implémentant le protocole STUN selon un mode de réalisation ;
- la figure 27 illustre le fonctionnement d'une plateforme logicielle selon un mode de réalisation ;
- la figure 28 illustre un exemple de répartition des éléments de la plateforme logicielle selon un mode de réalisation ;
- la figure 29 illustre la réalisation de la structure d'accès unifié selon un mode de réalisation ;
- la figure 30 illustre un fonctionnement de la structure d'accès unifié avec un équipement fonctionnant selon un mode synchrone selon un mode de réalisation ;
- la figure 31 illustre un fonctionnement de la structure d'accès unifié avec un équipement fonctionnant selon un mode asynchrone selon un mode de réalisation.

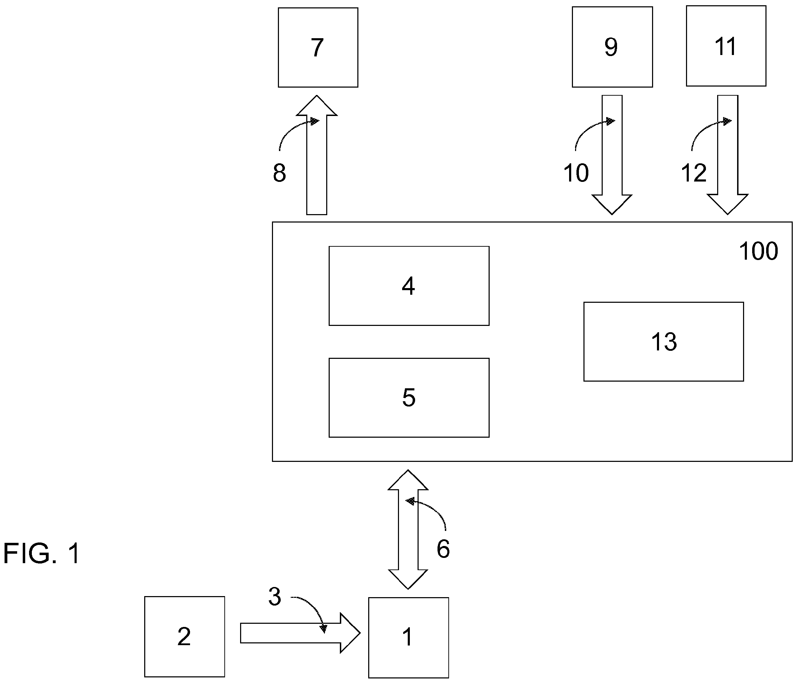

La figure 1 est un diagramme représentant un système **100** de gestion de données multi-vendeurs et multi-services selon un mode de réalisation. Le système **100** de gestion de données est interfacé avec les entités suivantes :
- un ou plusieurs équipements **1** disposés localement dans un lieu ou un environnement physique prédéfini, par exemple dans un environnement intérieur tel un domicile ou un bureau. Les équipements **1** sont fournis (flèche **3**) par des fournisseurs **2** d'équipements, c'est-à-dire des constructeurs technologiques. Avantageusement, les équipements **1** comprennent des capteurs et permettent de remonter à une plateforme **4** centrale de données, via l'intermédiaire d'un boitier **5** de communication de type « *box* », des données quantifiables et/ou de changement d'états associées aux mesures ou relevés d'état desdits capteurs (ex : mesure de température, position d'un commutateur associé à un système d'éclairage). Pour ce faire, les équipements **1** sont connectés au boitier **5** de communication par l'intermédiaire d'un réseau filaire ou sans fil. Le boitier **5** de communication échange quant à lui, de manière locale ou distante, des données avec la plateforme **4** centrale de données, par l'intermédiaire d'un autre réseau, par exemple Internet. En outre, les équipements **1** permettent d'effectuer des actions physiques (ex : allumer le chauffage) via l'intermédiaire d'un ou plusieurs actionneurs. Typiquement, un actionneur effectue une action suite à la réception d'une notification d'action communiquée depuis le boitier **5** de communication. Les données échangées entre chaque équipement **1** et le boitier **5** de communication, par exemple des remontées de données mesurées par les capteurs ou des notifications d'action à destination d'un actionneur d'un équipement **1,** sont communiquées selon ou un plusieurs protocoles **6** symbolisés par une double flèche. A titre d'exemples, un protocole **6** associé à un équipement peut être un protocole KNX, Zigbee, Wifi ou Z-wave ;
- des fournisseurs **7** de services utilisateurs, typiquement des acteurs du monde d'Internet, élaborant et fournissant à l'utilisateur des services utilisateurs ciblés sur un domaine particulier, par exemple des services relatifs à la sécurité, au confort, ou au bien-être. Avantageusement, ces fournisseurs **7** de services utilisateurs disposent d'une logique métier complète et réalisent des services utilisateurs sur la base de données et de services élémentaires, fournis préalablement à la plateforme **4** centrale de données. Avantageusement, ces fournisseurs **7** de services utilisateurs s'interfacent (flèche **8**) avec la plateforme **4** centrale de données selon un mode orienté architecture de service, couramment désigné sous le sigle SOA (acronyme anglais de « *Service Oriented Architecture* ») ;
- des fournisseurs **9** de données du monde internet, fournissant par exemple des données météorologiques, d'actualités ou encore issues de réseaux sociaux, permettant de remonter des données quantifiables (ex : mesures météo) ou des données de changement d'état. Avantageusement, ces fournisseurs **9** de données, s'interfacent (flèche **10**) aussi avec la plateforme **4** centrale de données selon un mode orienté architecture de service SOA ;
- des fournisseurs **11** de services élémentaires, acteurs du monde internet, fournissant des services élémentaires à la plateforme **4** centrale de données (ex : implémentation d'un service de notification), ces services étant utilisés par les fournisseurs **7** de services utilisateurs, comme des services « basiques » permettant de réaliser les services utilisateurs. Avantageusement, ces fournisseurs **11** de services élémentaires, s'interfacent (flèche **12**) aussi avec la plateforme **4** centrale de données selon un mode orienté architecture de service SOA.

Par ailleurs, tout fournisseur peut éventuellement jouer une pluralité de rôles. Par exemple, un fournisseur **9** de données peut aussi être un fournisseur **2** d'équipement et un fournisseur **7** de services utilisateurs.

Avantageusement, le système **100** de gestion de données prend en compte plusieurs dimensions :
- une dimension multi-services, c'est-à-dire intègre et propose une pluralité de types de services utilisateur, par exemple domotiques et e-santé ;
- une dimension multi-vendeurs, les équipements **1** supportés par le système **100** peuvent provenir de différents constructeurs, et comprennent des caractéristiques propres à chacun de ces constructeurs ;
- une dimension multi-niveaux, les données et les services élémentaires peuvent être fournis :
   ∘ au niveau des équipements **1** par au moins un boitier **5** de communication ;
   ∘ au niveau du système **100** de gestion de données. Par exemple, le système **100** réalise une analyse de données fournies par des équipements **1** ou des fournisseurs **9** de données, ces données étant éventuellement abstraites au préalable pour préserver leur confidentialité. Les résultats de l'analyse permettent alors au système **100** de mettre à disposition des corrélations, tendances, prédictions sur ces données ;
   ∘ au niveau des fournisseurs **7** de services utilisateurs, par la fourniture via le système **100** de gestion de données (éventuellement abstraites au préalable), de tendances/corrélations concernant ces données, et de services élémentaires pour réaliser les services utilisateurs.

Pour ce faire, le système **100** de gestion de données comprend les entités suivantes, dont le fonctionnement sera détaillé d'avantage ultérieurement :
- le boitier **5** de communication de type « *box* » pouvant, par exemple, être déployé au domicile de l'utilisateur. Ce boitier permet d'interconnecter un ou plusieurs équipements **1** via une liaison filaire ou sans fil selon un protocole prédéterminé fonction du constructeur (ex : TCP/IP, ZigBee, Wifi) et d'échanger des données avec la plateforme **4** centrale de données. Avantageusement, le boitier **5** de communication permet
   ∘ la gestion d'équipements **1** multi-vendeurs, c'est-à-dire supporte et gère une pluralité de protocoles, ainsi que les identifications et isolations des données/ressources de chacun des services exécutés en parallèle dans ce boitier ;
   ∘ de garantir une communication sécurisée et fiable avec la plateforme **4** centrale de données ;
   ∘ de fournir à la plateforme **4** centrale de données des données multi-vendeurs exploitables issues des capteurs des équipements **1** ;
   ∘ de réceptionner des notifications issues de la plateforme **4** centrale de données, se rapportant, à titre d'exemples à une prise en main à distance pour administration ou un envoi d'action(s) à exécuter par un ou plusieurs équipement **1** auquel il est interconnecté ;
- la plateforme **4** centrale de données concentrant et fédérant la totalité des données provenant des boitiers **5** de communication déployés en divers lieux (ex : domiciles, bureaux), les données issues des fournisseurs de données, ainsi que les services élémentaires nécessaires à l'élaboration de nouveaux services utilisateurs. Avantageusement, la plateforme **4** centrale de données est configurée pour :
   ∘ assurer un stockage centralisé et organisé des données, les données peuvent par exemple être organisées en fonction
      ▪ de leur structure : données brutes issues des capteurs, consolidées, agrégées et/ou abstraites. A titre d'exemple, pour des raisons de confidentialité, des données brutes remontées depuis un capteur peuvent être formatées/structurées par la plateforme **4** centrale de données selon un format pivot, permettant d'abstraire ces données, tel un format de type XML ;
      ▪ de leur origine : données issues des capteurs, remontées par les équipements **1** ou provenant d'un fournisseur **9** de données externe ;
      ▪ de leur droit d'accès et de leur identification : un fournisseur **7** de services utilisateurs peut avoir un accès limité à un certain type de données ;
   ∘ assurer la ségrégation des données et des services élémentaires. Avantageusement, ceci permet dans un environnement multi-vendeurs de faire bénéficier à un ensemble de fournisseurs **7** de services utilisateurs de la nature riche et multiple des données, et ce de manière contrôlée par
      ▪ une identification et une authentification des consommateurs de ces données, ici les fournisseurs **7** de services utilisateurs ;
      ▪ une restriction de l'accessibilité aux données/services, conformément aux droits des consommateurs de ces données ;
      ▪ un suivi de l'usage des consommations de données/services pour chacun de ces consommateurs ;
   ∘ assurer la confidentialité des données, par exemple, une anonymisation des données via une méthode d'abstraction (ex : abstraction des données selon un même format pivot);
   ∘ fédérer un ensemble de services élémentaires fournis par les fournisseurs **11** de services élémentaires, de façon à disposer d'un écosystème global, cohérent et contrôlé ;
   ∘ fournir les services élémentaires aux fournisseurs **7** de services utilisateurs pour la réalisation desdits services, à titre d'exemples, des services de type flux de travail (couramment désigné sous l'anglicisme « *Workflow* »), ou des services de traitement d'événements complexes CEP (acronyme anglais de « *Complex Event Processing* ») ;
   ∘ garantir une communication sécurisée et fiable avec les différents boitiers **5** de communication ;
   ∘ fournir des données exploitables à un module **13** analytique de méga-donnée dit « *Big Data Analytics »* ;
- un module **13** analytique de méga-donnée (dit « *Big Data Analytics* ») configuré pour analyser les données de la plateforme **4** centrale de données avec laquelle il est interfacé. Le module **13** analytique de méga-donnée permet notamment d'établir, puis mettre à disposition des fournisseurs **7** de services utilisateurs, des corrélations, tendances, et/ou prédictions des données enregistrées dans la plateforme **4** centrale de données, en générant des rapports d'analyses (services de « *reporting* »).

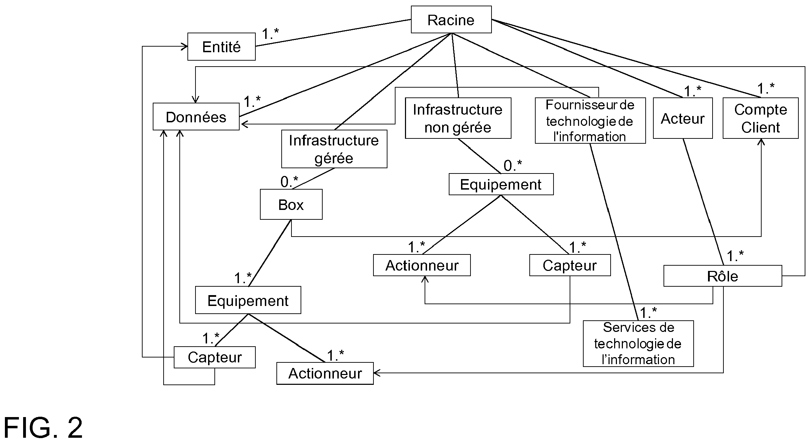

Avantageusement, les données issues de la plateforme **4** centrale de données sont identifiées, puis classifiées en fonction d'une topologie de données préétablie. A titre d'exemple, les figures 2 à 7 illustrent un mode de réalisation de topologie de données préétablie, selon un langage de modélisation unifié, dit UML, acronyme anglais de « *Unified Modeling Language* », cette topologie est détaillée ultérieurement.

Selon, divers modes de réalisations, une topologie de données est utilisée par la plateforme **4** centrale ou le module **13** analytique de méga-donnée (« *Big Data Analytics* ») pour classifier les données enregistrées dans la plateforme **4** centrale de données. Ainsi, dans un mode de réalisation, une topologie de données décrivant un modèle de classification de données est préenregistrée dans la plateforme **4** centrale de données, et mise à profit par cette dernière pour classifier les données. A titre d'exemple, la plateforme **4** centrale de données est configurée pour identifier la provenance d'une donnée, par exemple une mesure issue d'un capteur par lecture de son en tête, puis en fonction de sa provenance la classifier suivant la topologie préenregistrée. Dans un autre mode de réalisation, une topologie préétablie est préenregistrée dans le module **13** analytique de méga-donnée. Ce dernier est alors configuré pour ordonner/structurer les données de la plateforme **4** centrale de données, dans une base de donnée de cette plateforme (ex : une base NoSQL). Dans un autre mode de réalisation, les fonctions de la plateforme **4** centrale de données et du module **13** analytique de méga-donnée sont réalisées par un même et unique module (non représenté).

Avantageusement, les données enregistrées/manipulées dans la plateforme **4** centrale de données se présentent sous la forme d'objets métiers, c'est-à-dire de structures de données relatives, à titre d'exemples, à des équipements **1,** des objets, des lieus ou des entités s'interfaçant et échangeant des données avec le système **100** de gestion de données. Dans un mode de réalisation, dans un contexte domotique, le système **100** de gestion de données comprend les objets métiers suivants :
- « *Domicile* » : chaque domicile est associé à un identifiant unique sur la plateforme, identifié par un type (ex : particulier, entreprise) et associé à des caractéristiques qui lui sont propres (boitiers, équipements, capteurs, actionneurs) ;
- « *Box* » : cet objet désigne tout boitier **5** de communication encapsulant des services/fonctionnalités et supportant différents protocoles de communication. A chaque domicile, on associe au moins un boitier **5** de communication, c'est-à-dire un objet « *Box* », cet objet comprenant un identifiant unique ;
- « *Equipement* », chaque équipement **1** est installé dans un domicile, est relié uniquement à un seul boitier **5** de communication, et comprend un unique identifiant ;
- « *Capteur* », un capteur permet de mesurer une grandeur physique ou identifier un changement et est associé à un seul équipement **1** ;
- « *Actionneur* », un actionneur permet de déclencher une action suite à un évènement et est associé à un seul équipement **1.**

Par ailleurs, afin de classifier et discriminer les données enregistrées dans la plateforme **4** centrale de données, comme exposé précédemment, une topologie de données préétablie est mise en œuvre.

Un exemple de topologie est représenté sur la figure 2, sous la forme d'une arborescence composée de noeuds et d'arrêtes, en accord avec la norme UML. Cette arborescence comprend, ici, un nœud racine « *Racine* », les autres noeuds se rapportant aux entités de la plateforme. Plus particulièrement, chaque nœud de ce modèle est associé à un diagramme de classe, qui sera décrit ultérieurement. Avantageusement, la relation entre chaque entité est représentée par une arrête (lien) et une cardinalité. Les cardinalités de la figure 2 sont ici proposées à titre d'exemple purement illustratif. On constate par exemple sur cette figure que la cardinalité de l'arrête reliant le nœud « *Racine* » au nœud « *Entité* » est ici de « 1.* », ce qui signifie que le nœud « *Racine* » comporte une ou plusieurs instances de classe décrites dans la classe « *Entité* ». Les flèches de cette figure, illustrent les dépendances entre les différents nœuds, les nœuds de ce modèle étant les suivants :
- nœud « *Entité* » : ce nœud désigne un lieu, une personne, un animal ;
- nœud « *Données* » : ce nœud représente les données de la plateforme **4** centrale de données. Les sources de ces données sont les capteurs, les données agrégées d'un capteur, les données issues des fournisseurs **9** de données (ex : données environnementales, données des réseaux sociaux, ou plus généralement toutes données internet) ;
- nœud « *Infrastructure* » : ce nœud décrit les différents objets relatifs à l'environnement domiciliaire, tels que les objets *« Box », « Equipement », « Capteur », « Actionneur »* précédemment cités. On distingue, par ailleurs, deux type d'infrastructures : gérée ou non gérée. On désigne, ici, par infrastructure gérée, tout objet associé à un boitier **5** de communication, et plus généralement tout objet connecté, pouvant échanger des données avec la plateforme **4** centrale de données, et pouvant être supervisé par le système **100** de gestion de données. Ainsi, une infrastructure gérée est inventoriée dans le système **100** de gestion de données et configurable sous la responsabilité de ce système.
- Par opposition, on entend par infrastructure non-gérée, tout objet ou équipement **1** ne pouvant être supervisé par le système **100** de gestion de données. Une telle infrastructure reste cependant inventoriée, c'est-à-dire connu du système **100** de gestion de données ;
- nœud « *Acteur* » : un tel nœud désigne les acteurs de la plateforme. Un acteur peut être un utilisateur de la plateforme, un fournisseur **7** de services utilisateurs, un fournisseur **2** d'équipements ou encore un consommateur de services. Avantageusement, le rôle de chaque acteur permet de définir les autorisations d'accès aux données et services ;
- nœud « *Fournisseur de technologie de l'information »,* couramment désigné sous l'anglicisme « *Fournisseur IT* » : ce nœud décrit l'ensemble des fournisseurs de la plateforme **4** centrale de données : fournisseurs **7** de services utilisateurs et/ou fournisseurs **11** de services élémentaires ;
- nœud « *Compte client* »: ce nœud décrit le compte d'un client ayant souscrit à un ensemble de services proposés par la plateforme **4** centrale de données, ou tout utilisateur disposant d'équipements **1** supportant des services proposés par la plateforme **4** centrale de données.

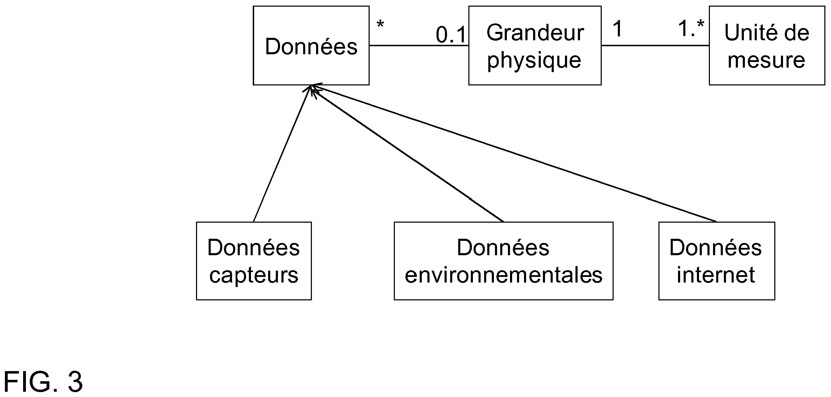

La figure 3 décrit ensuite le diagramme de classe associé au nœud « *Données* » précédemment décrit, c'est-à-dire les classes héritant du nœud « *Données* » permettant de classifier les différents types de données. Comme on peut le constater sur ce schéma, une donnée :
- peut comporter une unité de mesure, par exemple se rapporter à une température ou une pression mesurée par un capteur. En outre, une grandeur physique peut être associée à une pluralité d'unités de mesures. A titre d'exemple, pour une mesure de température on peut associer des unités Celsius et Fahrenheit ;
- une donnée peut ne pas comporter de mesure, par exemple lorsqu'elle porte sur un état (ex : état ouvert ou fermé d'une porte) ;
- une donnée peut être de type média, par exemple être du texte, une image ou de la vidéo.
Une donnée peut par ailleurs comporter une pluralité de sources
- « *Données capteurs* » : ces données sont issues de capteurs, et sont par exemple des données brutes (non-traitées) retournées par les capteurs, ou un ensemble de données agrégées selon une structure prédéterminée (ex : structurées selon un format pivot), cet ensemble se rapportant aux mesures d'au moins un capteur ;
- « *Données environnementales* » : ce sont des données qui ne sont pas fournies par le système **100.** Ces données se rapportent à un ensemble de données agrégées d'une zone géographique prédéterminée (ex : région, ville) et peuvent concerner à titre d'exemples des températures, pressions ou taux de particules ;
- « *Données internet* » dit « *données web* » : ces données peuvent être du texte, de l'image, de la vidéo ou tout autre support multimédia proposé par un fournisseur **9** de données.

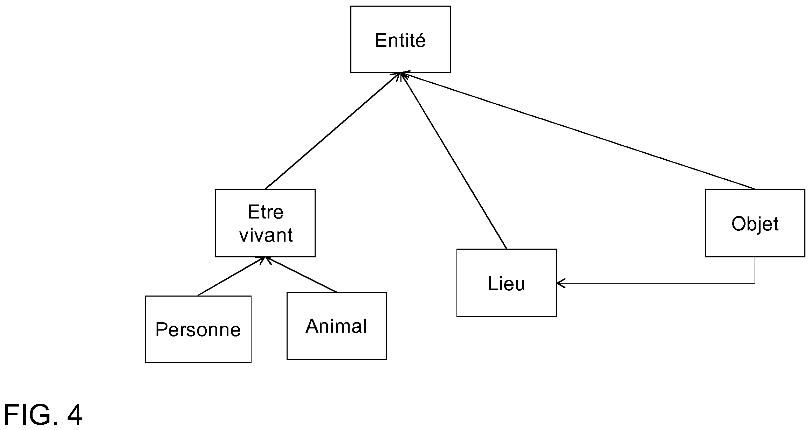

La figure 4 illustre un diagramme de classes décrivant les instances du nœud « *Entité* ». En référence à cette figure, dans ce modèle de topologie, une donnée se rapportant à la classe « *Entité* » peut être classifiée dans une des instances (« sous-classes ») suivantes :
- classe « *Etre vivant* », comprenant comme instances possibles
   ∘ une classe « *Personne* » : à titre d'exemple pour des services d'e-Santé une personne peut être équipée de capteurs pour mesurer sa tension, sa température et disposer d'un dispositif connecté (ex : montre) pour la transmission desdites mesures associées aux capteurs ;
   ∘ une classe « *Animal* » : un animal peut à titre d'exemple être équipé d'un collier ou d'une puce électronique permettant de le localiser ;
- classe « *Lieu* » : tout espace muni de capteurs, par exemple une entreprise ou un domicile ;
- classe « *Objet* » : généralement tout objet disposé dans un espace physique (ex : bureau, maison) utilisant un ou plusieurs capteurs pour mesurer une grandeur physique ou un état. A titre d'exemple, dans un domicile, un objet peut être un réfrigérateur équipé d'un capteur de température et de moyens d'émission/réception. Avantageusement, un lieu peut comprendre une pluralité d'objets.

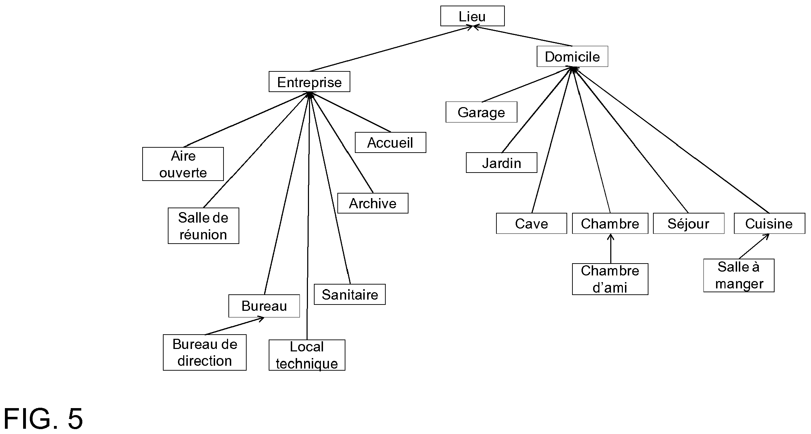

La figure 5 est un diagramme topologique décrivant les différents types de lieu ainsi que leurs compositions. Le système **100** vise en effet à gérer l'ensemble des équipements 1 ou objets connectés déployés sur différents lieux, lesdits équipements 1 ou objets étant eux même disposés dans des zones spécifiques et munis de capteurs. Dans cet exemple, un lieu est soit une entreprise soit un domicile. Ainsi, dans cet exemple, une donnée se rapportant à la classe « Lieu » peut être catégorisée dans les instances « *Domicile* » ou « *Entreprise ».*

La classe « *Domicile* » comprend ici pour instances les classes suivantes : « *Cuisine* »*,* « *Salle à manger* », « *Séjour* », « *Chambre* », « *Chambre d'ami* », « *Cave* », « *Jardin* », « *Garage* ».

La classe « *Entreprise* » peut quant à elle être implémentée par les instances suivantes: « *Accueil* », « *Salle de réunion* », « *Bureau* », « *Bureau de direction »,* « *Aire ouverte* » couramment désignée sous l'anglicisme « *Open space* », « *Local technique* », « *Archive* », « *Sanitaire* ».

Il est entendu que la modélisation de ces lieux est par la suite extensible en fonction des besoins.

Avantageusement, les caractéristiques la classe « *Capteur »* introduite en figure 2, permettent de fournir des données aux fournisseurs **11** de services élémentaires pour le développement de services fiables. Couramment, un capteur peut être décrit pas les caractéristiques suivantes :
- son étendue de mesure : les valeurs extrêmes pouvant être mesurées par le capteur ;
- sa résolution : la plus petite variation de grandeur mesurable par le capteur ;
- sa sensibilité : la variation du signal de sortie par rapport à la variation du signal d'entrée ;
- sa précision : aptitude du capteur à donner une mesure proche de la valeur vraie ;
- sa rapidité : temps de réaction du capteur ;
- son protocole : protocole supporté, interface de communication utilisée.

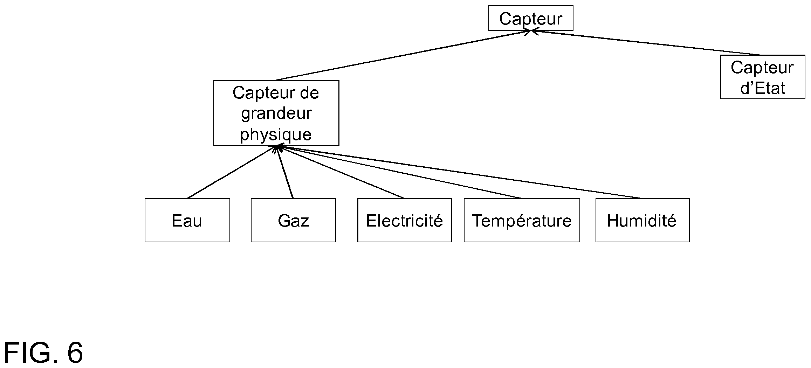

La figure 6 illustre un diagramme topologique permettant de classifier une donnée se rapportant à la classe « *Capteur ».* Sur cette figure, la classe « Capteur » comprend pour instances :
- une classe « *Capteur de grandeur physique* » : ce type de capteur permet de mesures une grandeur physique comme un débit d'eau, de gaz, une consommation d'électricité, une valeur de température, de pression, ou encore un taux d'humidité ;
- une classe « *Capteur d'état* » : ce type de capteur permet d'identifier l'état d'un objet, par exemple l'état d'une porte (fermée ou ouverte). On peut citer à titre d'autres exemple, un capteur de présence, ou un capteur d'image.

Le nœud « *Acteur* » de la figure 2 comprend pour instance le nœud *« Rôle* », un acteur du système **100** pouvant cumuler différents rôles.

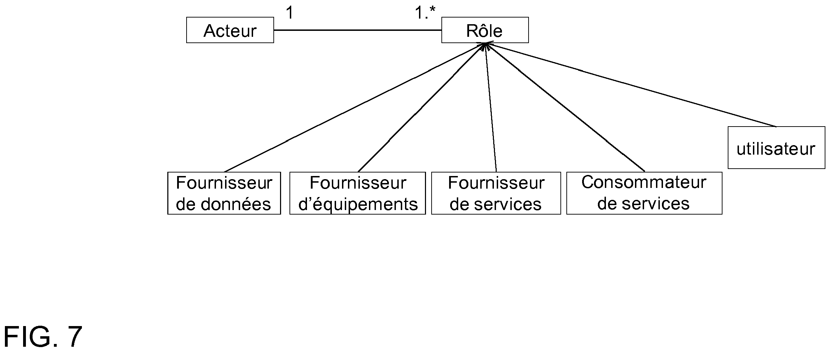

La figure 7 illustre le sous-ensemble topologique se rapportant à cette dernière entité. Avantageusement, la classe « *Rôle* » comprend les instances suivantes :
- classe « *Fournisseur de données* » : un fournisseur **9** de données fournit des données qui seront exploités par les services proposés par la plateforme **4** centrale de données ;
- classe « *Fournisseur d'équipements* » : un fournisseur **2** d'équipements fournit des objets matériels pour le système **100** tels que des capteurs, équipements **1,** actionneurs ;
- classe « *Fournisseur de services* » : un fournisseur **7** de services utilisateurs fournit et expose les services utilisateurs sur la plateforme **4** centrale de données ;
- classe « *Consommateur de services* » : cette instance désigne les acteurs exploitant des services exposés par la plateforme **4** centrale de données. A titre d'exemple, un constructeur d'équipements électroménagers peut exploiter les données de la plateforme **4** centrale de données pour adapter son offre. Par ailleurs, un fournisseur **7** de services utilisateurs ou un fournisseur **2** d'équipements peut utiliser des services exposés par la plateforme **4** centrale de données. Dans ce cas, l'acteur est à la fois fournisseur de services/d'équipements et consommateur de services ;
- classe « *Utilisateur* » : cette instance désigne une personne, située par exemple dans un domicile ou d'une entreprise, disposant au moins d'un boitier **5** de communication de type « *Box* ».

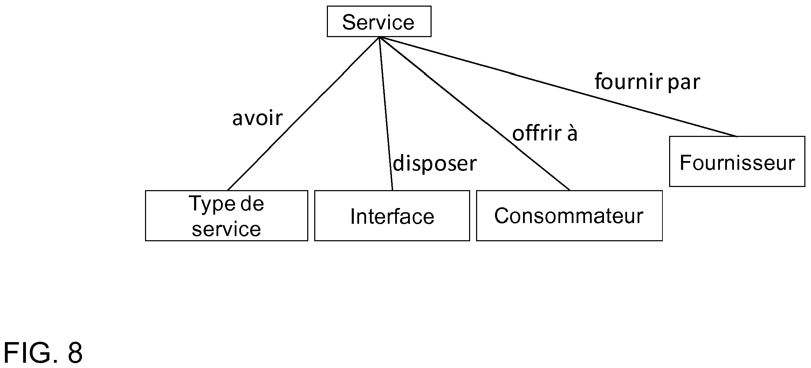

La figure 8, est un diagramme topologique illustrant, selon la norme UML, la modélisation d'un service. Sur cette figure le nœud symbolisant la classe « Service » est relié par des arrêtes aux instances suivantes : « *Fournisseur* », « *Consommateur* », « *Interface* », « *Type de service* ». Avantageusement, un service du système **100** de gestion de donnée comporte les caractéristiques suivantes :
- il est exposé (arrête « fournir par ») par un fournisseur (fournisseur **7** de services utilisateurs et/ou fournisseurs **11** de services élémentaires) sur la plateforme **4** centrale de données ;
- il est consommé (arrête « offrir par ») par des acteurs (ex : clients, fournisseurs) du système **100** de gestion de données ;
- il est associé à une interface prédéterminée. Sur la plateforme **4** centrale de données, dans la majorité des cas, le service dispose (arrête « disposer ») d'une interface réseau ;
- il est déployé sur la plateforme **4** centrale de données, c'est-à-dire sur le « *Cloud* », ou déployé localement sur le boitier **5** de communication. Le lieu de déploiement conditionne le type de service (arrête « avoir »).

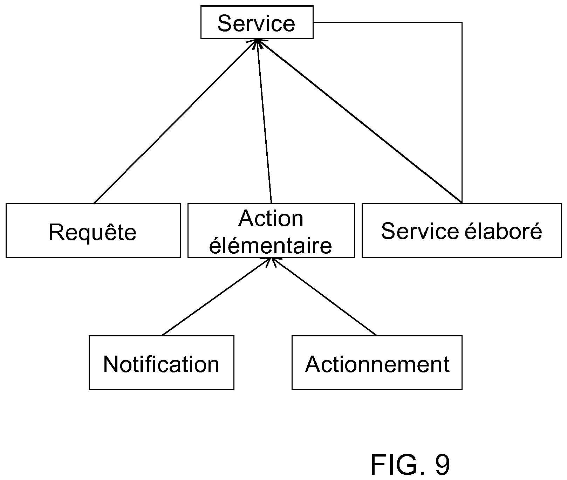

Avantageusement, le système **100** de gestion de données permet de fournir des services utilisateurs et de gérer ces services depuis leurs conception technique jusqu'à leur déploiement. Pour ce faire, la plateforme **4** centrale de données propose des services élémentaires et des services élaborés, ces derniers étant réalisés via un nombre déterminé de services élémentaires. La figure 9 illustre la relation topologique existant entre ces différents services, on y distingue :
- les services de type requête : ces services portent sur les données. Avantageusement, en interrogeant via des requêtes la base de données constitutive de la plateforme **4** centrale de données, il est possible de fournir des données à un ou plusieurs acteurs du système **100.** A titre d'exemple, les données peuvent être des données brutes relatives aux capteurs ou des données agrégées ;
- les services d'actionnement : il s'agit des services qui font appel aux actionneurs d'équipements **1** afin de réaliser une action ;
- les services de notification : ces services effectuent un ensemble d'opérations déterminées, en s'appuyant sur les données stockées dans la plateforme **4** centrale de données. A titre d'exemples, ces services permettent de réaliser un diagnostic, ou préconiser un scénario relatif à un équipement **1,** afin d'optimiser la consommation d'énergies non-renouvelables tel que l'électricité, le gaz, et l'eau ;
- les services élaborés : il s'agit des services qui sont réalisés selon une séquence prédéterminée de flux de tâches, couramment désignées sous l'anglicisme « *workflow* ». Ces services permettent de réaliser un ensemble d'opérations en faisant couramment appel aux services élémentaires.

Avantageusement, l'ensemble des noeuds précédemment décrits, ainsi que leurs sous-ensembles topologiques, constituent un modèle sémantique de données. Basé sur ce modèle sémantique, le module **13** analytique de méga-donnée dit « *Big Data Analytics* » (ou la plateforme **4** centrale de données), est configuré pour appliquer un traitement sur les données enregistrées dans la plateforme **4** centrale. A titre d'exemple, le module **13** analytique de méga-donnée classifie, segmente, agrège, abstrait et/ou formate toute donnée de la plateforme **4** centrale. Par exemple, en supposant que chaque donnée comprend un identifiant caractéristique de son origine, par exemple un identifiant relatif à l'adresse d'un réseau internet ou d'un boitier **5** de communication, le module **13** analytique de méga-donnée classifie en fonction de ces identifiants les données utilisateurs brutes ou agrégées issues des capteurs, ou les données internet fournies par les fournisseurs **9** de données. Par ailleurs, le module **13** analytique de méga-donnée procède éventuellement sur ces données à une étape d'abstraction/d'anonymisation, permettant de préserver leur confidentialité, puis les rend accessibles aux fournisseurs **7** de services utilisateurs.

Avantageusement, le module **13** analytique de méga-donnée propose des services pour différentes phases d'utilisation des données stockées dans la plateforme **4** centrale de données. On distingue les phases suivantes :
- phase de veille et tendances : cette phase permet d'identifier des tendances en analysant des données issues d'internet et des réseaux sociaux. Pour cette phase, le module **13** analytique de méga-donnée met à disposition des outils et des méthodes d'analyse de données (ex : Pig/Hive) à destination des fournisseurs **7** de services utilisateurs. Avantageusement, ces outils permettent aux fournisseurs **7** de services utilisateurs d'identifier des sujets relatifs aux données enregistrées dans la plateforme **4** centrale de données, et d'élaborer des indicateurs statistiques par rapport à ces sujets. A titre d'exemple, le module **13** analytique de méga-donnée conduit une analyse sur des données issues de réseaux sociaux ou de requêtes de moteurs de recherches, ces données étant fournies par les fournisseurs **9** de données à la plateforme **4** centrale de données. Le résultat de l'analyse réalisé par le module **13** analytique de méga-donnée est alors retourné au fournisseur **7** de services utilisateurs sous forme de mots clés, lui permettant d'identifier un sujet pertinent d'actualité en vue de réaliser des services utilisateurs ;
- phase d'élaboration des services : cette phase permet aux fournisseurs **7** de services utilisateurs d'élaborer des services. Pour ce faire, la plateforme **4** centrale de données fournit des données fiables (éventuellement abstraites), et le module **13** analytique de méga-donnée propose des outils permettant l'analyse de ces données. Selon divers modes de réalisations, le module **13** analytique de méga-donnée propose des outils statistiques basés sur
   ∘ des méthodes de corrélation de données, par exemples des corrélations de
      ▪ Pearson pour des variables quantitatives continues ;
      ▪ Spearman pour des données ordinales en tenant compte de leurs rangs ;
      ▪ Kendall pour des données ordinales en tenant compte de leurs rangs ;
   ∘ des méthodes d'analyse de données, telles
      ▪ des méthodes d'analyse en composantes principales (ACP) pour étudier et visualiser des corrélations entre plusieurs variables ;
      ▪ des méthodes d'analyse de correspondances multiples (ACM) pour analyser la liaison entre des variables qualitatives ;
   ∘ des méthodes de regroupement de données couramment désignées sous l'anglicisme « *clustering* ».

Avantageusement, les données fiables à analysées/corrélées par le module **13** analytique de méga-donnée sont mises à disposition des différents fournisseurs **7** de services utilisateurs via un service de rapport (de type « *reporting* ») et se rapportent, à titres d'exemples, à des données des capteurs, des données environnementales, ou des données utilisateurs ;
- phase de déploiement d'un service : cette phase permet à différents fournisseurs **7** de services utilisateurs de déployer leurs services dans le système **100** de gestion de données. Pour cette phase, le module **13** analytique de méga-donnée met à disposition des fournisseurs **7** de services utilisateurs des outils de gestion du cycle de vie du service et des outils de contrôle apte à garantir des pré-requis pour le déploiement d'un service dans le système **100** de gestion de données ;
- phase de recommandation des services : cette phase met en oeuvre des algorithmes de recommandation pour préconiser des services aux acteurs du système **100** de gestion de données. On recommande, par exemple, durant cette phase, des services élémentaires aux fournisseurs **7** de services utilisateurs, des services utilisateurs et/ou des scénarios d'utilisation de services utilisateurs à des particuliers. Avantageusement, les services de recommandation fournis par le système **100** de gestion de données sont basés sur des méthodes de filtrage collaboratif. Un filtrage collaboratif est réalisé, à titre d'exemple, par le module **13** analytique de méga-donnée en appliquant une méthode apte à comparer les utilisateurs entre eux (ex : type de service utilisés, type de données consommées, comportement utilisateur), ou des éléments notés au préalable (ex : services utilisateurs préalablement notés par leurs clients). Dans un mode de réalisation, le système **100** de gestion de données propose durant cette phase un service d'autoréglage d'équipements **1.** Pour ce faire, le réglage d'un équipement **1** est mémorisé durant une période prédéfinie dans la plateforme **4** centrale de données, le réglage est ensuite appliqué à un ou plusieurs autres équipements **1** du même type. Dans un mode de réalisation, un service dit « du meilleur scénario » est proposé par le système **100** de gestion de données, afin de préconiser ou reproduire le meilleur scénario pour un service utilisateur, tel le réglage d'un appareil ou la gestion d'une ressource (ex : eau, gaz, électricité). Avantageusement, la recommandation du meilleur scénario, est basée sur le résultat d'une analyse conduite par le module **13** analytique de méga-donnée, cette analyse étant réalisée sur des informations remontées par des équipements **1** d'une catégorie d'utilisateurs similaires. Pour ce faire, on utilise des algorithmes de regroupement (« *clustering* ») de type « *k-means* » ou « *canopy* ». A titre d'exemple, la mise en place du service de meilleur scénario est réalisée via les étapes suivantes :
   ∘ sélection de l'équipement **1** ou de la ressource ;
   ∘ segmentation des utilisateurs ;
   ∘ application d'une méthode de type « *canopy* » pour calculer un ensemble de clusters d'utilisateurs ;
   ∘ application d'une méthode de type « *k-means* », afin d'identifier le meilleur scénario relatif à chaque cluster ;
- phase de notation des services (« *scoring* ») : cette phase, permet d'attribuer un score et identifier les services non-pertinents. Le système **100** de gestion de donnée, propose par exemple à des clients de noter les services utilisateurs qu'ils utilisent dans une boutique en ligne, ou aux fournisseurs **7** de services utilisateurs de noter les services élémentaires mis à leur disposition pour la réalisation des services utilisateurs. Avantageusement, une telle phase permet d'anticiper l'obsolescence des services. Pour ce faire la plateforme fait appel à des algorithmes d'apprentissage, basés sur des méthodes statistiques, par exemple des méthodes de régression logistique ou des méthodes d'arbre. Avantageusement, pour anticiper l'obsolescence des services, le module **13** analytique de méga-donnée est configuré pour associer à chaque service un seuil, et calculer un score relatif audit service. Si le score du service est inférieur au seuil, alors le service alors identifié par le module **13** analytique de méga-donnée comme obsolète, les fournisseurs **7** de services utilisateurs s'en voient alors notifiés.

Un des enjeux de la plateforme **4** centrale de données concerne l'accès (avec ségrégation) aux données et services utilisateurs. La plateforme **4** centrale de données joue en effet un rôle pivot dans la gestion et la transmission des données avec les boitiers **5** de communication, le module **13** analytique de méga-donnée (« *Big Data Analytics* ») et les différents acteurs/consommateurs de données tels que les fournisseurs **7** de services utilisateurs. Ainsi, dans un mode de réalisation, on associe à la plateforme **4** centrale de données un équipement implémentant le protocole AAA (acronyme anglais de « *Authentication, Authorization, Accounting*»), qui réalise des fonctions d'authentification, d'autorisation, et de traçabilité des données et services exposés par la plateforme **4** centrale de données. Avantageusement, ceci permet de se prémunir qu'un consommateur de données n'accède à des données ou services auxquels il n'a pas droit ou susceptibles de déroger aux règles de la vie privée. A titre d'exemples, après authentification, un consommateur est autorisé à appeler un service de la toile (couramment désigné sous l'anglicisme « service web ») de type REST (acronyme de « *Representational State Transfer* ») ou SOAP (acronyme de « *Simple Object Access Protocol*»)*,* ou encore appeler un service un certain nombre de fois par unité de temps (ex : mille fois par mois). L'appel de services REST ou SOAP permet notamment la lecture des données émanant des équipements **1** ou du module **13** méga-donnée, et permet l'envoi d'actions vers les équipements **1.** En outre, la plateforme **4** centrale de données expose une ou plusieurs interfaces de programmation applicatives dites « *API* » (acronyme anglais de « *Application Programming Interface »),* et optionnellement une interface graphique utilisateur dite « *GUI* » (acronyme anglais de « *Graphical User Interface* »), permettant le provisionnement en données des consommateurs de données (clients, fournisseurs **7** de services utilisateurs), des applications consommatrices de données, et permettant de gérer les autorisations d'accès aux données, par exemple en fonction des rôles et de seuils préconfigurés.

Avantageusement, l'exposition d'une ou plusieurs interfaces de programmation applicative API par la plateforme **4** centrale de données est dédiée aux fournisseurs et permet :
- aux fournisseurs **11** de services élémentaires de gérer un ensemble de services (« *bundles* ») crées par les différents fournisseurs et déployés sur la plateforme **4** centrale de données (ex : validation du déploiement, des versions, mutualisation, statistiques) ;
- aux fournisseurs **7** de services utilisateurs, consommateurs de services élémentaires et de données, d'accéder de façon authentifiée, contrôlée et comptabilisée, au travers d'une couche frontale (ex : site internet, applications mobiles), aux informations produites par le module **13** analytique de méga-donnée (« *Big Data Analytics* »), après que ce dernier module ait traité (ex : analysé, corrélé, regroupé, formaté, abstrait) les données utilisateurs remontées par les différents boitiers **5** de communication.

De même, on met à disposition sur chaque boitier **5** de communication un ensemble d'interfaces de programmation applicative API dédiées cette fois aux utilisateurs finaux. Avantageusement, l'exposition d'une ou plusieurs interfaces de programmation applicative API dédiée aux utilisateurs finaux, permet au travers d'une couche frontale (ex : site internet, applications mobiles) de proposer
- aux utilisateurs finaux d'équipements **1,** l'achat de services utilisateur en ligne, par exemple via l'intermédiaire d'une boutique en ligne proposée par une application ;
- l'accès tout aussi bien aux informations globales (ex: données statistiques) portant sur le parc des boitiers **5** de communication, qu'aux informations individuelles par service acheté (accès authentifié, contrôlé et comptabilisé) ;
- au paramétrage de chaque service utilisateur (configuration personnalisée) ;
- l'accès à des services de notation et de recommandation pour chaque service acheté.

Avantageusement, l'intégration des données dans la plateforme **4** centrale de données est vue par les différentes entités comme une couche intermédiaire, assurant le transit des flux d'information entre :
- les boitiers **5** de communications, c'est-à-dire les informations provenant des capteurs de chaque équipement **1** ;
- une base sémantique, tel le modèle sémantique de données précédemment décrit ;
- l'ensemble des services accessibles au consommateur final constituant un portail de services ;
- les interfaces de programmation applicative API constituant un portail de gestion des services. Avantageusement, un tel portail facilite les interactions automatisées avec les équipements **1** ou les systèmes d'information des fournisseurs.

Notamment, dans un contexte multi-vendeurs, les différents dispositifs (équipements **1,** capteurs, actionneurs) connectés à un boitier **5** de communication peuvent provenir de différents vendeurs, qui n'ont pas préalablement connaissance les uns des autres, ces dispositifs étant à la fois supportés par le boitier **5** de communication et la plateforme **4** centrale de données. La plateforme **4** centrale de données banalise alors les données provenant desdits dispositifs, en les exposant comme des services (ex : d'action, d'alerte, de données), permettant ainsi le développement de services relatifs à de multiples dispositifs et/ou de multiples vendeurs, ces services étant déployés par la suite au niveau de la plateforme **4** centrale de données ou des différents boitiers **5** de communication.

Par ailleurs, l'intégration des données dans la plateforme **4** centrale de données permet par la suite d'entreprendre une liste d'actions, communiquée par la plateforme **4** centrale de données à au moins un boitier **5** de communication, ledit boitier étant relié à un nombre déterminé d'équipements **1.** Avantageusement, ces actions sont déterminées en fonction du modèle sémantique, et sont possiblement liées :
- à des données de métriques d'équipements **1** remontées par un boitier **5** de communication ;
- un événement déclencheur d'action préconfiguré, à titre d'exemple, une action configurée pour être déclenchée à une date ou une heure prédéfinie ;
- des notifications poussées par des interfaces de programmation applicative API exposées par la plateforme **4** centrale de données, poussées par exemple au travers d'un portail internet ou une application mobile, se rapportant à une demande d'action utilisateur ou fournisseur.

Ainsi, lors de la réception d'un événement tel qu'une notification ou une métrique, la plateforme **4** centrale de données via une couche d'intégration de données :
- enregistre dans un historique l'événement reçu s'il s'agit d'un événement provenant d'un boitier **5** de communication. L'événement peut éventuellement contenir des paramètres associés à un équipement **1** déterminé ;
- à l'aide du module **13** analytique de méga-donnée classifie l'événement avec l'aide d'une la base sémantique, et établit une corrélation entre cet événement et un service associé ;
- si le service existe, envoie des données associées à l'événement vers un mécanisme d'exécution (ex : associé à l'équipement **1**), ledit mécanisme étant configuré pour générer une action associée au service ainsi qu'à l'événement ;
- pousse via un mécanisme de type « *push* » l'action générée vers le boitier **5** de communication correspondant.

Par ailleurs, un autre enjeu de la plateforme **4** centrale de données concerne son interfaçage avec les boitiers **5** de communication. L'interface de la plateforme **4** centrale de données avec les boitiers **5** de communication doit en effet gérer les flux de données :
- dans le sens descendant : de la plateforme **4** centrale de données vers un boitier **5** de communication, par exemple lors de l'envoi d'une commande vers un équipement **1** de type actionneur ;
- dans le sens montant : d'un boitier **5** de communication vers la plateforme **4** centrale de données, par exemple lors de la remontée d'une mesure issue d'un capteur d'un équipement **1.**

Couramment, un boitier **5** de communication est localisé dans un réseau local « interne » (ex : LAN) et se connecte à un réseau distant « externe » (ex : Internet) par l'intermédiaire d'un dispositif d'accès intégré, couramment désigné sous l'anglicisme IAD (« *Integrated Access Device* »). Le dispositif d'accès intégré IAD est fourni par un fournisseur d'accès réseau internet et permet d'échanger des flux de données de différentes natures via une unique connexion. Ainsi, chaque boitier **5** de communication précédemment décrit se connecte à la plateforme **4** centrale de données derrière un dispositif d'accès intégré IAD. Afin d'assurer une communication entre chaque boitier **5** de communication et la plateforme **4** centrale de données, le dispositif d'accès intégré IAD établit une connexion avec la plateforme **4** centrale de données. Pour établir cette connexion, le dispositif d'accès intégré IAD et la plateforme **4** centrale de données disposent d'adresses publiques, tandis que le boitier **5** de communication, situé derrière le dispositif d'accès intégré IAD, dispose d'une adresse privée, non adressable depuis la plateforme **4** centrale de données. Avantageusement, une telle architecture permet que tout boitier **5** de communication situé derrière le dispositif d'accès intégré IAD, puisse être à l'initiative d'une connexion de donnée (flux montant) vers toute plateforme internet au sens large tout en restant protégé des menaces externes. Ainsi, dans le sens montant, tout boitier **5** de communication arrive par l'intermédiaire du dispositif d'accès intégré IAD à atteindre la plateforme **4** centrale de données, par exemple lors de la remontée de mesures ou d'événements retournés par des capteurs. Cependant, dans le sens descendant, par exemple pour la gestion d'actions à envoyer aux équipements **1,** la plateforme **4** centrale de données ne dispose pas de moyens permettant d'atteindre le boitier **5** de communication, du fait de son adressage privé derrière le dispositif d'accès intégré IAD. Par ailleurs, le boitier **5** de communication peut être momentanément indisponible du point de vue du dispositif d'accès intégré IAD, par exemples en cas de déconnexion temporaire ou d'un simple débranchement électrique. Couramment, tout dispositif d'accès intégré IAD propose une fonction de règles de traduction d'adresse réseau, couramment désignées sous l'anglicisme NAT (« *Network Address Translation*»), permettant de faire correspondre à une adresse publique/un port de sortie du dispositif d'accès intégré IAD une adresse privée/un port d'entrée relatif à un boitier **5** de communication. Une telle fonction n'est cependant pas réalisée par défaut et nécessite pour son activation la configuration de règles.

En outre, le développement de mécanismes permettant la prise en main à distance (ex : pour administration) et l'envoi d'action à des équipements **1,** connectés à un boitier **5** de communication, depuis la plateforme **4** centrale de données n'est pas implémenté dans l'architecture courante.

Selon divers modes de réalisations, la prise en main à distance et l'envoi d'action à un ou plusieurs équipements **1,** connectés à un boitier **5** de communication, depuis la plateforme **4** centrale de données, sont réalisés par l'implémentation de quatre mécanismes dont le fonctionnement général est ici brièvement rappelé :
- mécanisme de communication de type « tunnel via proxy ». Couramment, pour ce mécanisme, un boitier **5** de communication de type « *Box* » établit une connexion via un protocole de contrôle de transmissions, désigné par la suite sous l'appellation TCP, acronyme anglais de « *Transmission Control Protocol ».* Cette connexion est établie via la création d'un tunnel depuis le boitier **5** de communication vers un serveur proxy associé à une plateforme distante. Ainsi, dans les modes de réalisations développés ultérieurement, un tunnel est établi entre un boitier **5** de communication et un proxy disposé dans la plateforme **4** centrale de données. Le tunnel est alors maintenu ouvert par le boitier **5** de communication, par exemple via l'envoi de paquets factices (« *dummy packets* »), ou ré-ouvert en cas de déconnexion. La création de ce tunnel s'effectue dans le sens montant, c'est-à-dire du boitier **5** de communication vers la plateforme **4** centrale de données. L'établissement du tunnel permet, par la suite, la circulation d'informations montantes ou descendantes entre le boitier **5** de communication et la plateforme **4** centrale de données. Avantageusement, grâce au proxy, la plateforme **4** centrale de données voit alors le boitier **5** de communication, comme si le dispositif d'accès intégré IAD était absent et implémente un mécanisme d'échange de données bidirectionnel. Un tel mécanisme demeure néanmoins fortement consommateur de ressources sur les serveurs proxy du fait de maintenir des connexions TCP ouvertes avec les différents boitiers **5** de communication ;
- mécanisme de communication basé sur le protocole de contrôle de « dispositif de passerelle internet », désigné par la suite sous l'appellation protocole IGD, acronyme anglais de « *Internet Gateway Device Protocol* ». Le protocole IGD est décrit dans la norme UPnP (acronyme anglais de « *Universal Plug and Play* »). Couramment les « box » des opérateurs, c'est-à-dire les dispositifs d'accès intégré IAD dans ce document, proposent des fonctions de type routeur, « pare-feu » (« *firewall* » en anglais) et « UPnP ». Certaines applications réseaux, telles des applications de type pair-à-pair P2P, proposent parfois lors de leur installation sur une machine informatique une option de configuration automatique via l'utilisation d'un mécanisme de type « UPnP ». Le principe de ce mécanisme consiste, via un contrôleur UPnP présent dans le dispositif d'accès intégré IAD, à configurer via le protocole IGD, une fonction « traduction d'adresse réseau » NAT *(« Network Address Translation* » en anglais) du pare-feu. Cette configuration permet notamment d'établir une correspondance (« *mapping* » en anglais) entre les ports publics/les adresses publiques de l'IAD, et les ports privés/adresses privés d'objets connectés derrière le pare-feu de l'IAD, et ce de manière transparente pour l'utilisateur. Par exemple, le protocole IGD établit via la fonction NAT, une correspondance entre une adresse privée et un port privé vers un boitier **5** de communication déployé dans un réseau local, et une adresse publique et un port public vers la plateforme **4** centrale de données déployée sur internet. Avantageusement, l'utilisation de ce mécanisme, permet alors à la plateforme **4** centrale de données de voir alors le boitier **5** de communication, comme si le dispositif d'accès intégré IAD était absent et propose un mécanisme d'échange de données bidirectionnel. Ce mécanisme présente néanmoins des risques de type sécuritaire : la reconfiguration du pare-feu est potentiellement ouverte à tout logiciel tiers connecté au réseau local de l'IAD, et une fois le *« mapping* » mis en place, le boitier **5** de communication est potentiellement exposé à des risques d'attaques issues d'Internet. Par ailleurs, un tel mécanisme nécessite le support de l'UPnP par l'IAD et que cette fonction soit activée dans l'IAD ;
- mécanisme de communication utilisant le protocole « extensible de présence et de messagerie », désigné par la suite sous la dénomination protocole XMPP, acronyme anglais de « *Extensible Messaging and Presence Protocol* ». Ce protocole de messagerie est basé sur les protocoles TCP, XML et remplace le protocole Jabber qui est un protocole de messagerie instantanée. Le protocole XMPP est décrit dans la spécification TR-069. Notamment, l'annexe K.2 de la version 1.4 de cette spécification (Novembre 2013), décrit un mécanisme utilisant le protocole XMPP pour traiter via la fonction NAT, la problématique d'une requête de connexion « *Connection Request* » à destination d'un « Equipement des locaux d'abonné » couramment désigné sous la dénomination CPE, acronyme anglais de « *Customer Premises Equipment* ». Un CPE est, à titre d'exemple, le boitier **5** de communication déployé dans un réseau local. A des fins de compréhension, cette annexe est ici résumée, des détails supplémentaires pouvant être trouvés dans celle-ci :
   ∘ un serveur d'auto-configuration ACS (acronyme anglais de « *Auto-Configuration Serrer* ») établit une connexion avec un serveur XMPP. Le serveur d'auto-configuration ACS et le serveur XMPP sont, à titre d'exemple, installés dans un réseau internet ;
   ∘ ledit serveur d'auto-configuration ACS active l'utilisation du protocole XMPP au niveau d'un CPE par la configuration d'un objet XMPP « *XMPP Connection object* », en fournissant optionnellement un ensemble d'identifiants Jabber autorisés ;
   ∘ ledit CPE établit une connexion XMPP (par la voie montante) avec le serveur XMPP ;
   ∘ lorsque le serveur d'auto-configuration ACS cherche à communiquer avec le CPE il envoie un message « *XMPP Connection Request* » audit serveur XMPP. Ce message est une « strophe » XMPP, désignée couramment sous la dénomination « *XMPP IQ Stanza* », et comprend une requête de connexion « *Connection Request* » indiquant pour origine un identifiant Jabber autorisé, se rapportant au serveur d'auto-configuration ACS, et indiquant pour destination un identifiant relatif au CPE.
   ∘ le serveur XMPP transmet alors le message « *XMPP IQ Stanza* » au CPE approprié ;
   ∘ le CPE envoie en retour un message « *Inform Request* » à destination du serveur d'auto-configuration ACS.

Dans les modes de réalisations décrits par la suite, on associe le serveur d'auto-configuration ACS à la plateforme **4** centrale de données. Avantageusement, ceci permet alors de réaliser un mécanisme de type « réveil », permettant de diminuer la consommation de ressources par rapport aux mécanismes précédents: tout CPE, par exemple chaque boitier **5** de communication, est prévenu (« réveil ») qu'il doit contacter la plateforme **4** centrale de données par un flux montant afin de récupérer en retour le flux de données descendant. Avantageusement, un tel mécanisme permet une amélioration de la sécurisation du boitier **5** de communication ;
- mécanisme de communication basé sur le protocole « traversée simple UDP à travers les NAT », désigné par la suite sous la dénomination protocole « *STUN* », acronyme anglais de « *Simple Traversal of UDP through NATs* ». Le protocole STUN permet à une application d'un CPE (ex : le boitier **5** de communication) connecté à un IAD derrière un pare-feu, de découvrir la présence éventuelle d'une fonction (c'est-à-dire une passerelle) NAT de l'IAD, et obtenir la correspondance (« *mapping* ») de l'application avec l'adresse publique et le port UDP (anglicisme de « *User Datagram Protocol* ») du dispositif d'accès intégré IAD attribué par la passerelle NAT. L'utilisation de ce protocole nécessite l'assistance d'une tierce partie, à savoir un serveur STUN déployé dans un réseau public tel Internet. Le protocole STUN est décrit dans la spécification TR-111 (« Applying TR-069 to Remote Management of Home Networking Devices », Décembre 2005). Notamment, la partie «2.2 *Procedures*» de cette spécification décrit la procédure du protocole STUN pour qu'un CPE puisse recevoir une requête de connexion UDP depuis un serveur d'auto-configuration ACS distant. Le serveur d'auto-configuration ACS et le serveur STUN sont déployés du côté de l'adresse publique de la fonction NAT du dispositif d'accès intégré IAD. A des fins de compréhension, la partie 2 de la spécification TR-111 est ici résumée, des détails supplémentaires pouvant être trouvés dans celle-ci :
   ∘ le serveur d'auto-configuration ACS active l'utilisation du protocole STUN pour le CPE (si cette configuration n'est pas activée par défaut) et désigne un serveur STUN pour communiquer avec le CPE ;
   ∘ le CPE utilise alors le protocole STUN, pour découvrir si il se situe derrière une passerelle NAT avec une adresse privée allouée ;
   ∘ si oui, le CPE utilise la procédure définie par la norme STUN pour découvrir l'expiration de sa liaison de donnée derrière la passerelle NAT (« *binding timeout* ») ;
   ∘ afin d'effectuer l'étape de « *mapping* » le CPE envoie périodiquement des requêtes de liaisons STUN à destination du serveur STUN, dites « *STUN Binding Requests* ». Ceci permet de maintenir ouverte la liaison du CPE via la passerelle NAT, cette liaison permettant au CPE d'écouter d'éventuelles requêtes de connexion UDP (« *UDP Connection Requests* ») ;
   ∘ lorsque le CPE détermine l'adresse IP publique et le port public utilisé pour la liaison de la passerelle NAT (utilisés pour l'écoute de messages « *UDP Connection Requests* »), le CPE transfère les informations de « *mapping* » déterminées au serveur d'auto-configuration ACS, par exemple via l'envoi d'un message « *STUN Binding Request* » ;
   ∘ le serveur d'auto-configuration ACS établit alors une connexion UDP avec le CPE, via l'envoi d'un message de requête de connexion UDP « *UDP Connection Request* » vers le port et l'adresse publique de la passerelle NAT, déterminés par le CPE ;

Dans les modes de réalisations décrits par la suite, on associe le serveur d'auto-configuration ACS et le serveur STUN à la plateforme **4** centrale de données. Avantageusement, ceci permet alors de réaliser un mécanisme de type « réveil », permettant de diminuer la consommation de ressources par rapport aux mécanismes précédents: tout CPE, par exemple chaque boitier **5** de communication, est prévenu (« réveil ») qu'il doit contacter la plateforme **4** centrale de données par un flux montant afin de récupérer en retour le flux de données descendant. Avantageusement, un tel mécanisme est assez peu consommateur de ressources sur la plateforme **4** centrale de données. Cependant, l'envoi périodique de requêtes « STUN Binding request » qui laisse ouvert la passerelle NAT, expose potentiellement le CPE à des attaques externes.

Le tableau ci-dessous, recense les avantages et inconvénients de chacun des mécanismes précédemment introduits :

| | **Tunnel** | **UPnP** | **XMPP** | **STUN** |
|---|---|---|---|---|
| Sécurisation | Forte | Faible | Forte | Faible |
| Mise en œuvre | Complexe | Complexe | Facile | Complexe |
| Consommation | Forte | Faible | Moyenne | Faible |
| Dépendance IAD | Faible | Moyenne | Faible | Moyenne |

Actuellement, les mécanismes introduits ci-dessus ne permettent pas la prise en main à distance (ex : pour administration) et l'envoi d'action à des équipements **1,** connectés à un boitier **5** de communication, depuis la plateforme **4** centrale de données.

Ainsi, après implémentation, chacun des mécanismes introduit ci-dessus sera apte à proposer la prise en main à distance, ainsi que l'envoi d'action à des équipements **1** connectés à un boitier **5** de communication.

Selon divers modes de réalisations, lors du déploiement du système **100** de gestion de données, particulièrement des boitiers **5** de communication, on choisit un ou plusieurs de ces quatre mécanismes en fonction des contraintes techniques et opérationnelles. Avantageusement, on sélectionne un unique mécanisme pour chaque boitier **5** de communication en fonction, à titres d'exemples, du niveau de sécurisation du mécanisme, de sa complexité de mise en oeuvre, de sa consommation de ressources, et/ou de son niveau de dépendance vis-à-vis du dispositif d'accès intégré IAD. Ce choix peut, à titre d'exemple, s'appuyer sur le tableau précédemment exposé.

Selon divers modes de réalisations, lors de l'implémentation de ces mécanismes, on déploie alors des serveurs d'auto-configuration ACS, permettant de gérer les boitiers **5** de communication et l'initialisation des différents mécanismes.

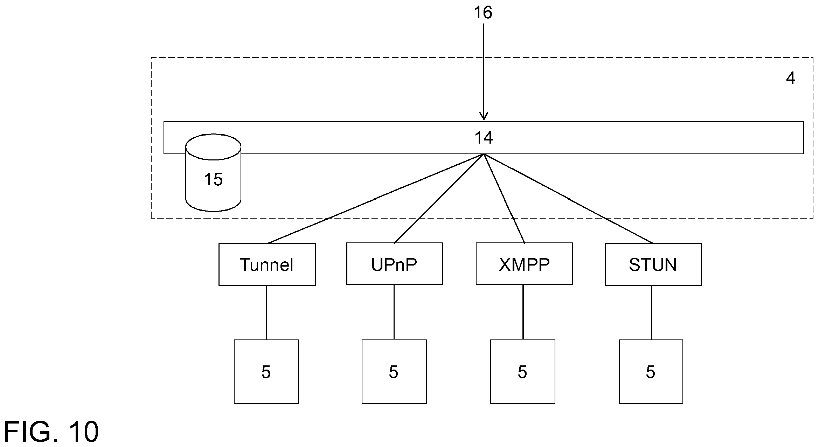

En référence à la figure 10, on réalise par ailleurs, une couche d'abstraction via un gestionnaire **14** d'actions, intégré au niveau de la plateforme **4** centrale de données, offrant une interface unifiée, c'est-à-dire indépendante du type de mécanisme implémenté et donc du protocole employé par ce mécanisme. La couche d'abstraction, est à titre d'exemple, réalisée à l'aide d'une méthode permettant de formater les données réceptionnées/enregistrées par cette couche selon un format pivot.

Avantageusement, le gestionnaire **14** est configuré pour gérer (ex : recevoir, transmettre, mettre en attente) les actions à destination des différents équipements **1.** Sur la figure 10, chaque boitier **5** de communication utilise un seul mécanisme de type « tunnel via proxy», « UPnP », « XMPP », ou « STUN », sélectionné lors du de leur déploiement et en accord avec les contraintes opérationnelles. En outre, pour chaque boitier **5** de communication, le mécanisme sélectionné est mémorisé dans la plateforme **4** centrale de données, via une base **15** de données associée au gestionnaire **14** d'actions.

Avantageusement, lors de la réception d'une requête **16** d'action (ex : une action poussé par un consommateur d'action) à destination d'un un équipement **1** connecté à un boitier **5** de communication, le gestionnaire d'action **14** est configuré pour :
- stocker l'action réceptionnée dans la base **15** de données, permettant ainsi
   ∘ une mise en attente temporaire, le temps que le boitier **5** de communication reçoive la requête **16** d'action. La mise en attente est particulièrement avantageuse lorsque le boitier **5** de communication est temporairement indisponible, par exemple lors d'une perte de connexion avec la plateforme **4** centrale de données ;
   ∘ de traiter la requête **16** d'action, par exemples : identifier l'équipement ciblé (identifiant, adresse), identifier le boitier **5** de communication auquel il est connecté, identifier le mécanisme de communication à employer avec ledit boitier **5** de communication pour transmettre la requête **16** d'action. Ces différentes identifications, sont par exemple réalisées par comparaison de l'identifiant de l'équipement avec un ensemble informations préenregistrées dans la base **15** de données ;
- déclencher l'action sur l'équipement **1** en transmettant la requête **16** d'action à son boitier **5** de communication, via un mécanisme de communication approprié, identifié dans la base **15** de données.

Par ailleurs, comme exposé précédemment, les mécanismes basés sur les protocoles XMPP et STUN sont de type « réveil » : le boitier **5** de communication, est prévenu qu'il doit contacter la plateforme **4** centrale de données par un flux montant afin de récupérer en retour le flux de données descendant. Afin de supporter ce mécanisme, on réalise alors deux composants :
- un agent de réveil (« *Wakeup Agent* ») réalisé sur le boitier **5** de communication par la mise en place d'une couche intergicielle, couramment désignée sous l'anglicisme couche « *middleware* »*.* Avantageusement, la réalisation d'une telle couche permet à toute application du boitier **5** de communication de souscrire à un service de réveil, lui permettant d'être réveillée par une application centrale ;
- un serveur de réveil (« *Wakeup Server* ») via la réalisation d'une couche intergicielle sur la plateforme **4** centrale de données, permettant à tout service « consommateur » d'action (intégré ou non sur la plateforme **4** centrale de données) de réveiller une application du boitier **5** de communication.

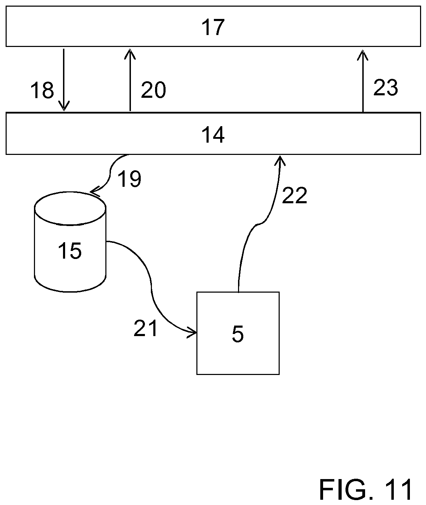

La figure 11, illustre le flux fonctionnel de données relatives à un consommateur **17** d'action, tel un fournisseur **7** de services utilisateurs :
- le consommateur **17** d'action pousse (flux **18**) une requête **16** d'action vers le gestionnaire **14** d'actions de la plateforme **4** centrale de données. Cette requête **16** action comporte des informations sur le type d'action à effectuer et l'équipement **1** ciblé par cette action (ex : identifiant de l'équipement, description de l'action). Cette requête **16** d'action peut éventuellement être accompagnée d'une date limite de validité et d'une adresse, par exemple une adresse de type « localisateur uniforme de ressource » dite URL, pour notifier la réception et/ou le traitement de la requête **16** d'action par le boitier **5** de communication ;
- le gestionnaire **14** d'actions stocke (flux **19**) en file d'attente dans la base **15** de données cette demande et acquitte (flux **20**) la requête **16** d'action émise pour notifier au consommateur **17** d'action que celle-ci a bien été prise en compte ;
- à partir de l'identification de l'équipement **1** ciblé, le gestionnaire **14** d'actions identifie le boitier **5** de communication et son mécanisme d'accès correspondant, puis transmet la requête **16** d'action au boitier **5** de communication. La transmission de la requête **16** d'action est fonction du type de mécanisme de communication, deux situations pouvant survenir
   ∘ si le mécanisme de communication est de type bidirectionnel (de type « tunnel via proxy » ou UPnP) :
      ▪ le gestionnaire **14** d'actions contacte le boitier **5** de communication via l'adresse publique fournie par le tunnel, ou par le dispositif d'accès intégré IAD dans le cas d'un mécanisme UPnP ;
      ▪ si, selon le cas, le tunnel est ouvert ou la configuration UPnP effectuée, le gestionnaire **14** d'actions envoie (flux **21**) une requête au boitier **5** de communication pour lui fournir la requête **16** d'action. Sinon, le gestionnaire **14** d'actions attend le rétablissement du tunnel ou la reconfiguration UPnP pour alors envoyer la requête **16** d'action, en gérant éventuellement les dates limites de validité de la requête **16** d'action ;
   ∘ si le mécanisme est de type « réveil » (STUN ou XMPP)
      ▪ le gestionnaire **14** d'actions contacte le serveur de réveil (« *Wakeup Server* », couche intergicielle) de la plateforme **4** centrale de données ;
      ▪ ce serveur de réveil tente alors de réveiller boitier **5** de communication par un protocole de bas niveau (en STUN ou XMPP selon le cas). Avantageusement, le contenu du message de réveil à destination du boitier **5** de communication est limité, et peut se restreindre au type de réveil, par exemples : un réveil pour action sur l'équipement **1** ou un réveil pour une prise en main à distance de l'équipement **1.** En outre, ce message se rapporte idéalement à un protocole en mode non-connecté, par exemple au « protocole de datagramme utilisateur » dit UDP. Le serveur de réveil gère par ailleurs des fonctionnalités de retransmission, car le boitier **5** de communication n'est pas forcément accessible au moment de la dépose de l'action ;
      ▪ une fois le boitier **5** de communication accessible, le message de réveil parvient à l'agent de réveil (« *Wakeup Agent* ») de ce dernier, qui est alors en charge d'analyser le type de réveil et d'initier la connexion vers la plateforme **4** centrale de données et vers la bonne application pour récupérer les actions en attente ;
      ▪ la plateforme **4** centrale de données via l'intermédiaire de son gestionnaire **14** d'actions fournit (flux **21**) alors les requêtes d'actions en attentes (dont ladite requête **16** d'action) au boitier **5** de communication, en gérant éventuellement la date limite de validité de chacune des requêtes ;
   ∘ le boitier **5** de communication exécute ou transmet alors aux équipements **1** auquel il est connecté, la requête **16** d'action et retourne (flux **22**) un compte-rendu au gestionnaire **14** d'actions ;
   ∘ le gestionnaire **14** d'actions notifie (flux **23**) alors au consommateur **17** d'actions, la bonne exécution de l'action associée à sa demande initiale (si précisé lors de la demande initiale).

Avantageusement, le flux fonctionnel décrit ci-dessus est unifié, c'est-à-dire comporte les mêmes étapes, et ce quelque soit le mécanisme considéré. Le fonctionnement desdits mécanismes implémentés est maintenant décrit pour les cas de figures suivants : prise en main à distance d'un équipement **1,** envoi d'action à un équipement **1,** remontée de mesure du capteur d'un équipement **1** à destination de la plateforme **4** centrale de données.

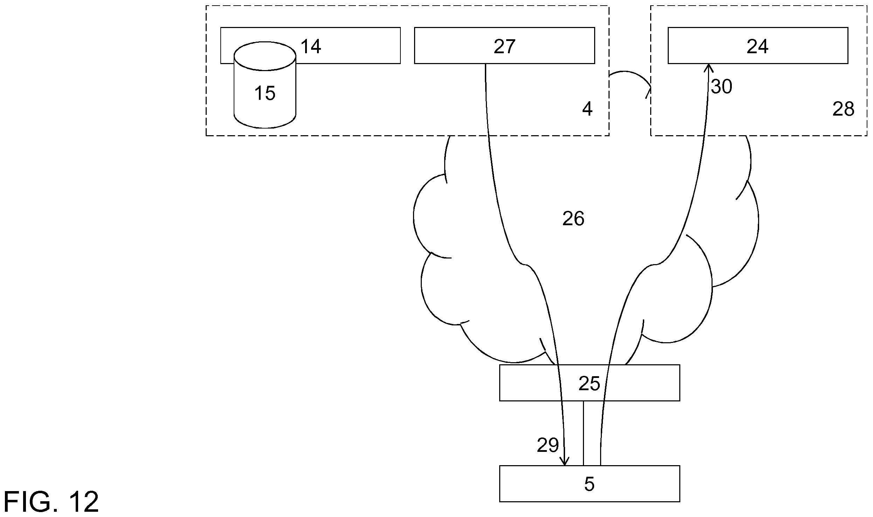

La figure 12 illustre les principaux flux d'un mécanisme de communication, pour mettre en oeuvre un tunnel entre le boitier **5** de communication et un serveur **24** proxy. Sur cette figure, un boitier **5** de communication est interfacé avec un dispositif **25** d'accès intégré IAD, via premier un port de communication, le boitier **5** de communication étant uniquement adressable via une adresse privée située derrière le dispositif **25** d'accès intégré IAD. Le dispositif **25** d'accès intégré IAD dispose, par ailleurs, d'un deuxième port de communication, lui permettant d'être adressable depuis un réseau **26** externe, par exemple un réseau internet, via une adresse publique. Une plateforme **4** centrale de données comprend un gestionnaire **14** d'actions associé à une base **15** de données, ainsi qu'un serveur **27** d'auto-configuration ACS tel que décrit dans la spécification TR-069. Par ailleurs, pour des raisons d'extensibilité, le serveur **24** proxy est déployé dans une plateforme **28** mandataire, apte à échanger des données avec la plateforme **4** centrale de données. Avantageusement, chaque boitier **5** de communication étant connecté en permanence avec un serveur **24** proxy, une telle architecture permet qu'un même serveur **24** proxy puisse gérer une pluralité de boitier **5** de communications dans une plateforme **28** mandataire spécifique. Chaque plateforme **28** mandataire, utilise quant à elle un nombre déterminé de connexions TCP avec la plateforme **4** centrale de données, ce nombre étant indépendant du nombre de boitier **5** de communication auquel il est connecté. Pour ce faire, on peut éventuellement utiliser des techniques de multiplexage. Avantageusement, une telle architecture permet aux serveurs **24** proxys d'être vus de la plateforme **4** centrale de données, comme des instances virtuelles des boitiers **5** de communication, mais déployés sur un réseau public (ex : Internet). Une telle configuration est particulièrement avantageuse, car elle permet de s'affranchir des problématiques concernant l'adressage des boitiers **5** de communication dans un réseau privé. Par ailleurs, en fonction du nombre de boitiers **5** de communication, il est possible si nécessaire d'ajouter des plateformes **28** mandataires supplémentaires, participant ainsi à l'extensibilité de cette architecture. Le serveur **27** d'auto-configuration ACS disposé dans la plateforme **4** centrale de données, permet d'informer tout boitier **5** de communication, lors de son initialisation, du serveur **24** proxy auquel il est rattaché. L'établissement du tunnel entre le boitier **5** de communication et le serveur **24** proxy est maintenant décrit. L'établissement de ce tunnel survient à chaque initialisation du boitier **5** de communication et comprend les étapes suivantes :
- lors de son initialisation, le boitier **5** ce communication se déclare à la plateforme **4** centrale de données via le serveur **27** d'auto-configuration ACS selon le protocole de gestion TR-069 ;
- le boitier **5** de communication est alors pris en compte par la plateforme **4** centrale de données, et celle-ci choisit un serveur **24** proxy en vue d'établir un tunnel avec le boitier **5** de communication, et l'associe au boitier **5** de communication. A titre d'exemple, le serveur **24** proxy est choisi par la plateforme **4** centrale de données, en fonction d'une proximité géographique et d'une disponibilité ;
- cette association est transmise au serveur **27** d'auto-configuration ACS ;
- puis via un message « *SetParameterValues* », dont la structure est définie dans le protocole TR-069, le serveur **27** d'auto-configuration ACS active dans le boitier **5** de communication, l'usage du tunnel en lui fournissant (flux **29** de la figure) l'adresse du serveur **24** proxy ;
- le boitier **5** de communication établit (flux **30** de la figure) alors une connexion TCP avec le serveur **24** proxy, et envoie un message (non-standard) de liaison « *BIND* » pour lui indiquer son identification. Avantageusement, le message « BIND » comprend l'identifiant du boitier **5** de communication, ainsi que les paramètres de la connexion TCP (ex : adresse et port distant, socket). La réception de ce message par le serveur **24** proxy, va donc permettre à ce dernier de gérer l'instance virtuelle du boitier **5** de communication, en conservant pour cette instance l'identifiant du boitier **5** de communication, ainsi que les paramètres de la connexion TCP ;
- cette connexion TCP est ensuite maintenue ouverte en permanence par le boitier **5** de communication.

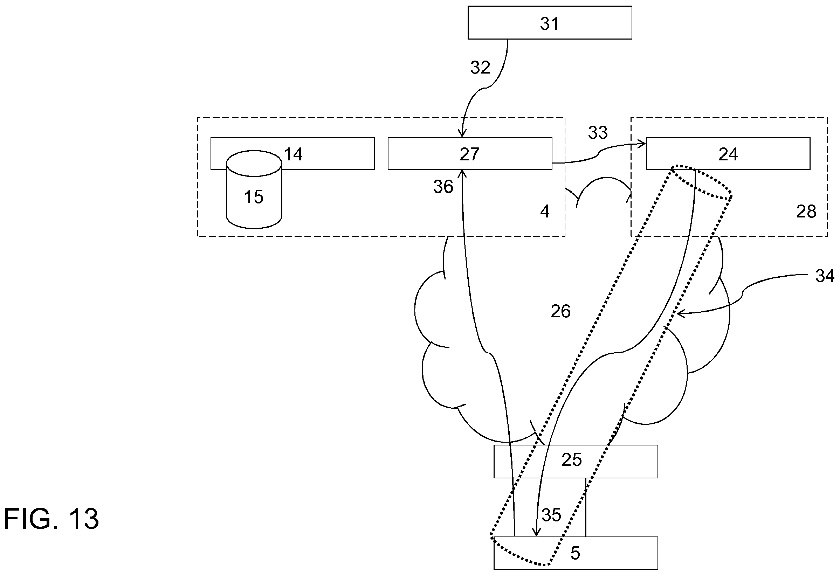

La figure 13, illustre ensuite pour l'architecture précédente, les principaux flux de données permettant la prise en main à distance du boitier **5** de communication et/ou des équipements **1** :
- un acteur **31** externe, tel un fournisseur **7** de services utilisateurs, envoie (flux **32**) une requête de prise en main, pour un boitier **5** de communication ou un équipement **1,** au serveur **27** d'auto-configuration ACS ;
- le serveur **27** d'auto-configuration ACS envoie (flux **33**) alors un message de requête de connexion « *Connection Request* », en accord avec la spécification TR-069, au serveur **24** proxy, en spécifiant dans ce message un identifiant relatif au destinataire final de la prise en main, par exemple relatif à un boitier **5** de communication (ou un équipement **1**) ciblé ;
- grâce à l'identifiant du boitier **5** de communication, le serveur **24** proxy sélectionne alors l'instance virtuelle du boitier **5** de communication, et donc le tunnel **34** correspondant ;
- le serveur **24** proxy transmet alors via le tunnel **34** correspondant la requête de connexion « *Connection Request* » au boitier **5** de communication (flux **35**) ;
- le boitier **5** de communication traite alors la requête et émet (flux **36**) en retour un message « *Inform request* » en accord avec la spécification TR-069, à destination du serveur **27** d'auto-configuration ACS, pour lui notifier le traitement de la requête ;
- la prise en main du boitier **5** de communication (ou de l'équipement 1), suit ensuite le protocole TR-069, comme tout type de topologie réseau avec un CPE (ici le boitier **5** de communication).

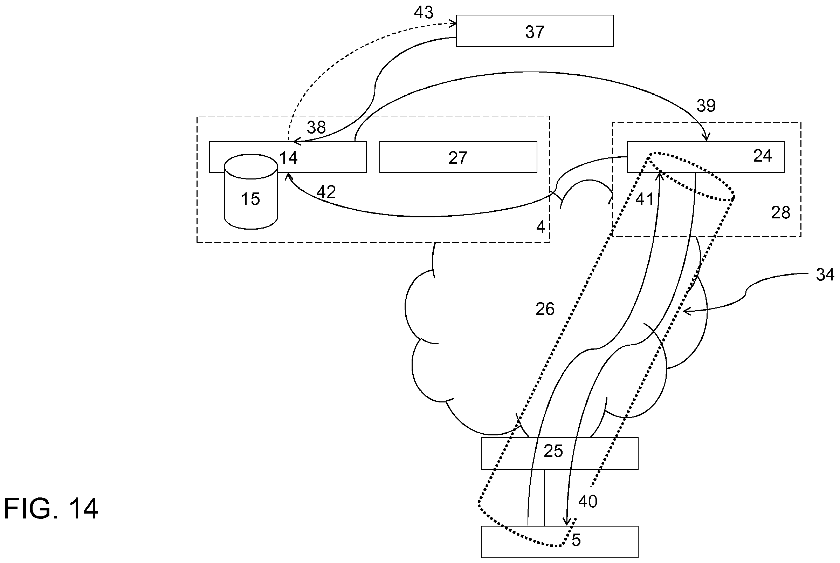

La figure 14, illustre pour la même architecture, les principaux flux de données permettant de transmettre une requête **16** d'action vers un actionneur associé à un équipement **1** :
- un acteur **37** externe tel un consommateur d'action envoie (flux **38**) une requête **16** d'action vers le gestionnaire **14** d'actions de la plateforme **4** centrale de données ;
- le gestionnaire **14** d'actions stocke alors ladite requête **16** d'action dans la base **15** de données, puis envoie la requête **16** d'action au serveur **24** proxy. Pour ce faire, le gestionnaire **14** d'actions ouvre une connexion TCP et est configuré pour envoyer (flux **39**) deux requêtes au serveur **24** proxy :
   ∘ une première requête, qui est une requête (non-standard) de connexion « *CONNECT* », comprenant l'identification du boitier **5** de communication ciblé. Avantageusement, le message « *CONNECT* » permet de spécifier au serveur proxy **24** que les requêtes suivantes, à savoir les demandes d'action, doivent s'adresser au boitier **5** de communication ;
   ∘ une deuxième requête correspondant à la requête **16** d'action, selon une syntaxe identique au cas d'un boitier **5** de communication directement visible d'internet, par exemple une syntaxe http(s) ;
- avantageusement, grâce au message de requête de connexion « *CONNECT* » (première requête), le serveur **24** proxy sélectionne l'instance virtuelle du boiter **5** de communication ciblé et le tunnel **34** correspondant. Avantageusement, ceci réalise une association temporaire au sein du serveur **24** proxy, entre la connexion du gestionnaire **14** d'actions à ce serveur et le tunnel **34** du boitier **5** de communication ;
- le serveur **24** proxy acquitte alors au gestionnaire **14** d'actions la bonne réception du message de requête de connexion *« CONNECT* ». Tant que le gestionnaire **14** d'actions ne reçoit pas cet acquittement, par exemple lorsque le tunnel **34** n'est pas établi, le gestionnaire **14** d'actions est configuré pour réémettre périodiquement ce message ou attendre le rétablissement du tunnel **34** ;
- lorsque l'acquittement du message « *CONNECT* » est reçu par le gestionnaire **14** d'action, celui-ci transmet alors la deuxième requête, c'est à a dire la demande **16** d'action au serveur **24** proxy ;
- le serveur **24** proxy envoie (flux **40**) alors par le tunnel **34** la requête **16** d'action telle que reçue au boitier **5** de communication ciblé ;
- le boitier **5** de communication exécute alors l'action demandée ou sinon la transmet à l'équipement **1** concerné pour exécution, puis retourne (flux **41**) ensuite un compte-rendu au serveur **24** proxy via le tunnel **34** ;
- le serveur **24** proxy transmet (flux **42**) alors le compte-rendu tel que reçu au gestionnaire **14** d'actions ;
- si demandé, le gestionnaire **14** d'actions notifie (flux **43**) alors à l'acteur **37** externe de la bonne exécution de sa demande d'action initiale par le boitier **5** de communication ou l'équipement **1** concerné.

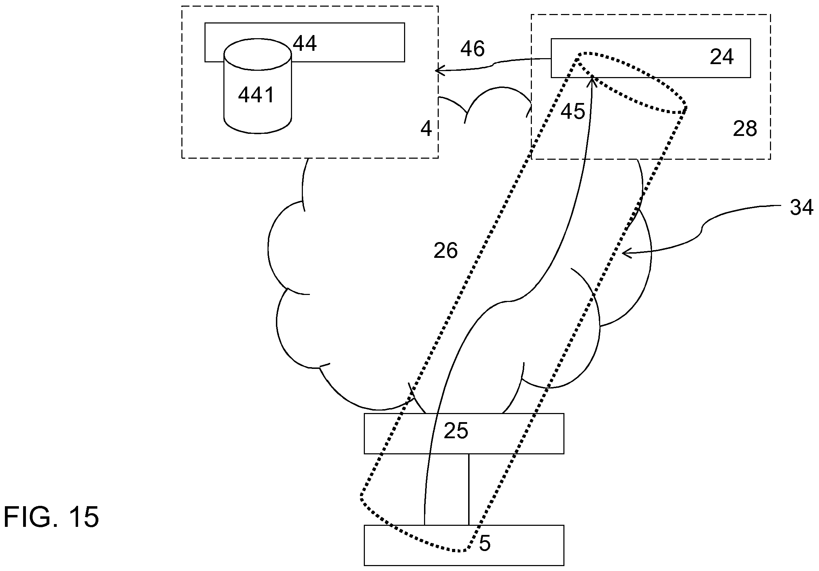

La figure 15, illustre encore pour le même mécanisme, les principaux flux de données permettant de remonter une mesure d'un capteur associé à un équipement **1.** Sur cette figure, la plateforme **4** centrale de données comprend, en outre, un gestionnaire **44** de mesures associé à une base **441** de donnée, permettant de gérer (stocker et/ou mettre à disposition) les données associées aux capteurs des différents équipements **1.** Le processus de remontée de mesure vers la plateforme **4** centrale de données depuis le capteur d'un équipement **1** connecté à un boitier **5** de communication est le suivant :
- le boitier **5** de communication récupère la mesure issue dudit capteur et transmise par l'équipement **1** ;
- le boitier **5** de communication envoie (flux **45**) alors au serveur **24** proxy, par le tunnel **34** précédemment établi, la mesure par un message indiquant que la cible est le gestionnaire **44** de mesures, par exemple en utilisant un message du type « *GET http(s)* » ;
- le serveur **24** proxy initie alors une connexion TCP vers le gestionnaire **44** de mesures et transmet (flux **46**) la mesure.

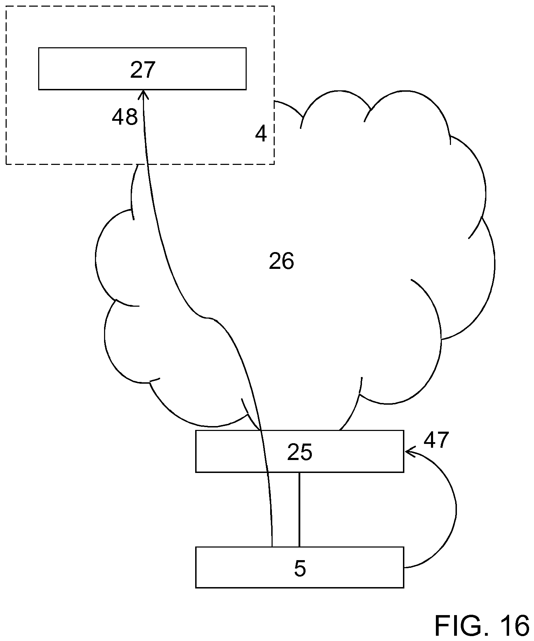

La figure 16 illustre les principaux flux mis en oeuvre pour l'établissement d'une connexion entre la plateforme **4** centrale de données, et un boitier **5** de communication, pour un mécanisme de communication implémentant le protocole UPnP. Tout comme précédemment :
- le boitier **5** de communication est interfacé avec un dispositif **25** d'accès intégré IAD, via premier un port de communication, le boitier **5** de communication étant uniquement adressable via une adresse privée ;
- le dispositif **25** d'accès intégré IAD dispose d'un deuxième port de communication, lui permettant d'être adressable depuis un réseau **26** externe, par exemple un réseau internet, via une adresse publique ;
- la plateforme **4** centrale de données comprend un gestionnaire **14** d'actions associé à une base **15** de données (non-représentés sur cette figure), ainsi qu'un serveur **27** d'auto-configuration ACS tel que décrit dans la spécification TR-069.

Le processus suivant est exécuté à chaque initialisation du boitier **5** de communication:
- lors de son initialisation, le boitier **5** ce communication se déclare à la plateforme **4** centrale de données par le serveur **27** d'auto-configuration ACS via le protocole de gestion TR-069 ;
- le boitier **5** de communication est alors pris en compte par la plateforme **4** centrale de données, et celle-ci active dans le boitier **5** de communication l'utilisation du protocole UPnP ;
- le boitier **5** de communication émet alors des requêtes UPnP vers dispositif **25** d'accès intégré IAD, afin d'ouvrir un port de communication TCP public, permettant ainsi l'activation (flux **47**) de la fonction de traduction d'adresse réseau NAT ;
- le boitier **5** de communication transmet (flux **48**) alors au serveur **27** d'auto-configuration ACS, via le protocole TR-069, le port TCP public ouvert sur le dispositif **25** d'accès intégré IAD correspondant à la traduction d'adresse NAT vers le boitier **5** de communication.

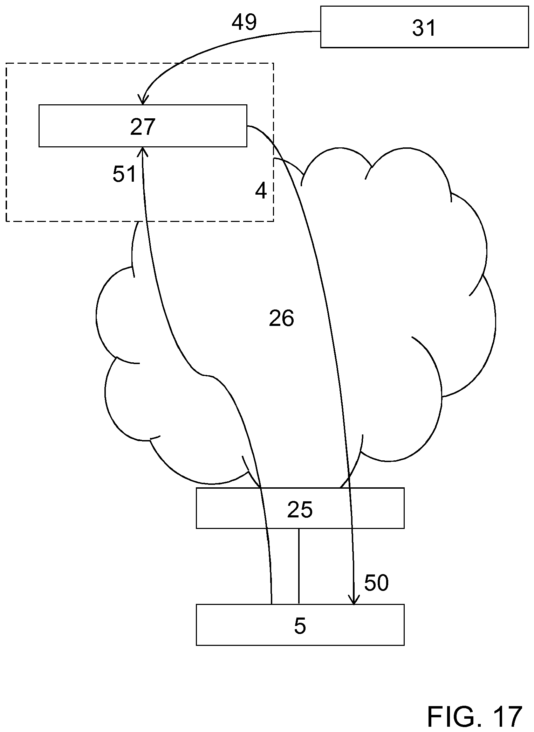

La figure 17, illustre ensuite pour le mécanisme précédent, les principaux flux de données, permettant la prise en main à distance du boitier **5** de communication et/ou des équipements **1** :
- tout d'abord un acteur **31** externe tel un fournisseur **7** de services utilisateurs envoie (flux **49**) une requête de prise en main au serveur **27** d'auto-configuration ACS ;
- le serveur **27** d'auto-configuration ACS envoie (flux **50**) alors un message « *Connection Request* », en accord avec la spécification TR-069, vers le boitier **5** de communication. Pour ce faire, il envoie le message « *Connection Request* » à l'adresse publique du dispositif **25** d'accès intégré IAD, sur le port TCP public ouvert lors de l'établissement UPnP. Le dispositif **25** d'accès intégré IAD transmet alors le message au boitier **5** de communication en appliquant la fonction de traduction d'adresse réseau NAT ;
- le boitier **5** de communication traite alors l'ordre et émet (flux **51**) en retour un message « *Inform request* », en accord avec la norme TR-069, à destination du serveur **27** d'auto-configuration ACS pour lui notifier le traitement de la requête ;
- la prise en main du boitier **5** de communication (ou de l'équipement **1**), suit alors par la suite le protocole TR-069, comme tout type de topologie réseau avec un CPE (ici le boitier **5** de communication).

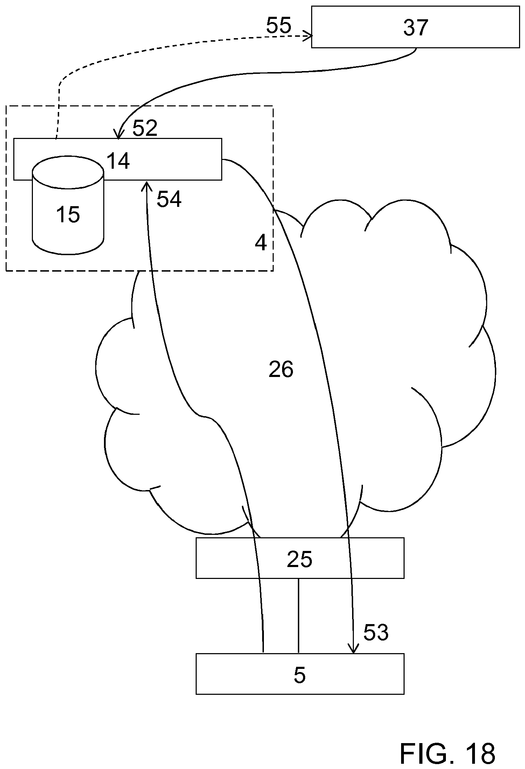

La figure 18, illustre pour le même mécanisme, les principaux flux de données permettant de transmettre une demande d'action vers un actionneur associé à un équipement **1** :
- un acteur **37** externe tel un consommateur d'action poste (flux **52**) une demande d'action vers le gestionnaire **14** d'actions de la plateforme **4** centrale de données ;
- le gestionnaire **14** d'actions stocke alors ladite demande dans la base **15** de données, puis envoie (flux **53**) la demande au boitier **5** de communication. Pour ce faire, il envoie la demande à l'adresse publique du dispositif **25** d'accès intégré IAD sur le port TCP public ouvert lors de l'établissement de l'UPnP. Le dispositif **25** d'accès intégré IAD transmet alors via l'utilisation de la fonction de traduction d'adresse réseau NAT, la demande au boitier **5** de communication ;
- le boitier **5** de communication exécute alors l'action demandée, ou sinon la transmet à l'équipement **1** concerné pour exécution, puis retourne (flux **54**) ensuite un compte-rendu au gestionnaire **14** d'actions. Tant que le gestionnaire **14** d'actions ne reçoit pas ce compte-rendu, par exemple lorsque la fonction NAT UPnP n'est pas établie, le gestionnaire **14** d'action est configuré pour réémettre périodiquement ce message ou attendre le rétablissement de la fonction de traduction d'adresse réseau NAT UPnP ;
- si demandé, le gestionnaire **14** d'actions notifie (flux **55**) alors à l'acteur **37** externe de la bonne exécution de sa demande d'action initiale par le boitier **5** de communication ou l'équipement **1** concerné.

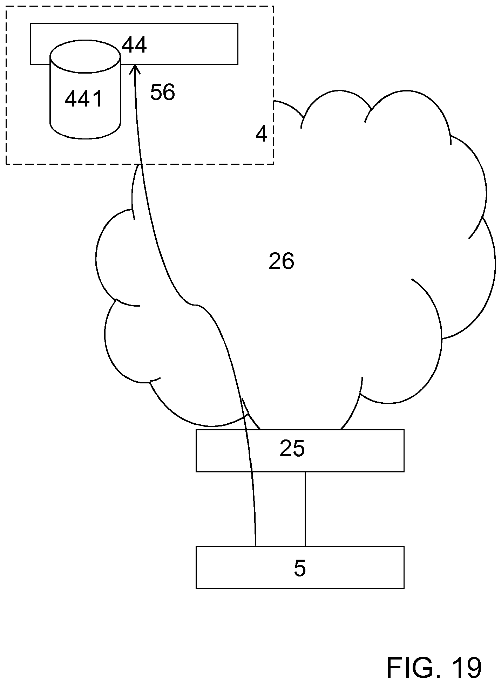

La figure 19, illustre encore pour le même mécanisme, les principaux flux de données permettant de remonter une mesure d'un capteur associé à un équipement **1,** vers le gestionnaire **44** de mesures de plateforme **4** centrale de données :
- le boitier **5** de communication récupère la mesure issue dudit capteur et transmise par l'équipement **1** ;
- le boitier **5** de communication initie (flux **56**) ensuite une connexion, par exemple de type « http(s) » vers le gestionnaire **44** de mesures de la plateforme **4** centrale de données ;
- le boitier **5** de communication transmet finalement la mesure par un message indiquant que la cible est le gestionnaire **44** de mesures, par exemple en utilisant un message du type « *GET http(s)* »*.*

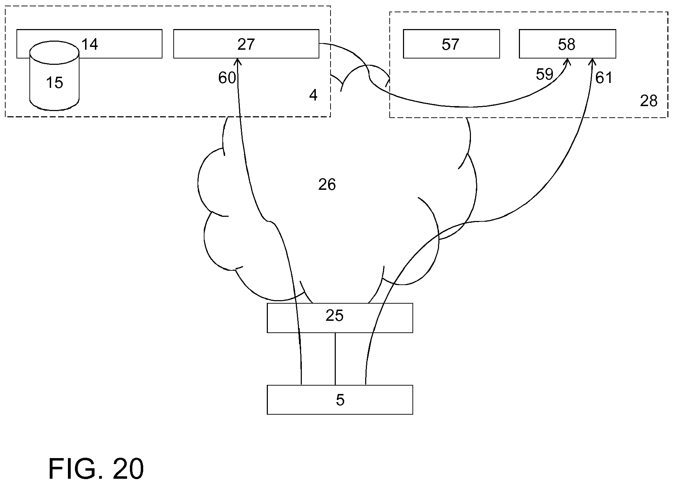

La figure 20 illustre ensuite les principaux flux mis en œuvre pour l'établissement d'une connexion entre la plateforme **4** centrale de données, et un boitier **5** de communication, pour un mécanisme de communication implémentant le protocole XMPP. Tout comme précédemment :
- le boitier **5** de communication est interfacé avec un dispositif **25** d'accès intégré IAD, via premier un port de communication, le boitier **5** de communication étant uniquement adressable via une adresse privée ;
- le dispositif **25** d'accès intégré IAD dispose d'un deuxième port de communication, lui permettant d'être adressable depuis un réseau **26** externe, par exemple un réseau internet, via une adresse publique ;
- la plateforme **4** centrale de données comprend un gestionnaire **14** d'actions associé à une base **15** de données, ainsi qu'un serveur **27** d'auto-configuration ACS tel que décrit dans la spécification TR-069.

Par ailleurs, pour des raisons d'extensibilité, un serveur **57** proxy http et un serveur **58** proxy XMPP, réalisés en accord avec la norme TR-069 sont déployés dans une plateforme **28** mandataire, la plateforme **28** mandataire étant apte à échanger des données avec la plateforme **4** centrale de données. Avantageusement, chaque boitier **5** de communication étant connecté en permanence avec un serveur **58** proxy XMPP. Avantageusement, la réalisation d'une telle architecture permet qu'un même serveur **58** proxy XMPP puisse gérer une pluralité de boitier **5** de communications dans une plateforme **28** mandataire spécifique. Comme exposé ultérieurement, les serveurs **57** proxy http seront quant à eux, utilisés lors de la remontée de mesures ou la récupération d'actions via des requêtes http. Chaque plateforme **28** mandataire utilise, quant à elle, un nombre déterminé de connexions avec la plateforme **4** centrale de données, ce nombre de connexions étant indépendant du nombre de boitier **5** de communication auquel elle est connectée. Pour ce faire, on peut éventuellement utiliser des techniques de multiplexage. Par ailleurs, en fonction du nombre de boitiers **5** de communication, il est possible, si nécessaire, d'ajouter des plateformes **28** mandataires supplémentaires, ainsi que des serveurs **58** proxy XMPP et des serveurs **57** proxy http, participant ainsi à l'extensibilité de cette architecture. Le serveur **27** d'auto-configuration ACS disposé dans la plateforme **4** centrale de données, permet alors d'informer tout boitier **5** de communication lors de son initialisation du serveur **58** proxy XMPP auquel il est rattaché. De même, lors de la configuration du boitier **5** de communication, lors de son démarrage, le serveur **27** d'auto-configuration ACS est en charge d'informer le boitier **5** de communication de son serveur **57** proxy http mandataire.

L'établissement d'une connexion XMPP entre le boitier **5** de communication et le serveur **58** proxy XMPP est maintenant décrit. L'établissement de cette connexion survient à chaque initialisation du boitier **5** de communication et comprend les étapes suivantes :
- lors de son initialisation, le boitier **5** de communication se déclare à la plateforme **4** centrale de données par le serveur **27** d'auto-configuration ACS via le protocole de gestion TR-069 ;
- le boitier **5** de communication est alors pris en compte par la plateforme **4** centrale de données, et celle-ci choisit un serveur **58** proxy XMPP mandataire, par exemple en fonction d'une proximité géographique et d'une disponibilité serveur **58** proxy XMPP, et l'associe au boitier **5** de communication ;
- cette association est ensuite transmise au serveur **27** d'auto-configuration ACS ;
- le serveur **27** d'auto-configuration ACS, établit (flux **59**) alors une connexion avec le serveur **58** proxy XMPP, qui sera ensuite maintenue ouverte par le serveur **27** d'auto-configuration ACS ;
- puis via le message « *SetParameterValues* » du protocole TR-069, le serveur **27** d'auto-configuration ACS active dans le boitier **5** de communication, l'usage du protocole XMPP en lui fournissant (flux **60**) l'adresse du serveur, ainsi que les identifiants Jabber autorisés. Avantageusement, les identifiants Jabber autorisés sont déclarés de manière identique dans le serveur **58** proxy XMPP et le serveur **27** d'auto-configuration ACS, et permettent à tout client XMPP, par exemple au boitier **5** de communication, de s'identifier au cours des échanges XMPP ;
- le boitier **5** de communication établit (flux **61** de la figure) alors une connexion XMPP avec le serveur **58** proxy XMPP, cette connexion sera ensuite maintenue ouverte en permanence par le boitier **5** de communication.

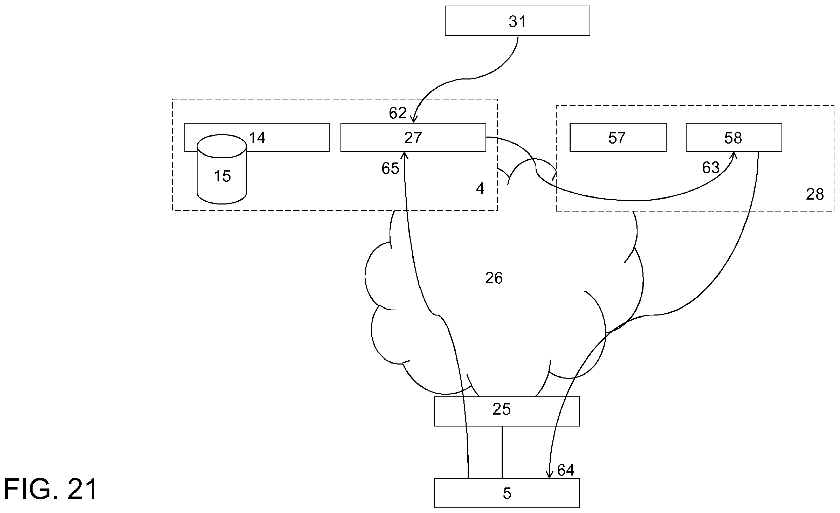

La figure 21, illustre pour l'architecture et le mécanisme précédent, les principaux flux de données permettant la prise en main à distance du boitier **5** de communication et/ou des équipements **1** :
- tout d'abord un acteur **31** externe tel un fournisseur **7** de services utilisateurs envoie (flux **62**) une requête de prise en main au serveur **27** d'auto-configuration ACS ;
- le serveur **27** d'auto-configuration ACS envoie (flux **63**) alors, en accord avec l'annexe K.2 de la spécification TR-069, un message de requête de connexion « *Connection Request* » en XMPP (« strophe » XMPP de type « *XMPP IQ Stanza* ») au serveur **58** proxy XMPP. Le serveur **27** d'auto-configuration ACS spécifie dans ce message, le destinataire final de la prise en main, par exemple un boitier **5** de communication ciblé, ainsi que la source de ce message identifiée par un identifiant Jabber autorisé. La structure d'un tel message est notamment détaillé dans l'annexe K.2.3.1 de la spécification TR-069 ;
- le serveur **58** proxy XMPP transmet (flux **64**) ensuite le message au boitier **5** de communication via le protocole XMPP ;
- le boitier **5** de communication réceptionne alors le message, et génère un message de réponse en XMPP (« strophe » XMPP de type « *XMPP IQ Stanza* ») de type « *résultat* » en cas de bonne prise en compte du message précédent, ou de type « *erreur* » sinon. Les structures de ces messages de réponse, sont respectivement détaillé dans l'annexe K.2.3.2 et K.2.3.3 de la spécification TR-069 ;
- le boitier **5** de communication traite alors la requête et émet (flux **65**) en retour un message « *Inform request* », en accord avec la spécification TR-069, à destination du serveur **27** d'auto-configuration ACS pour lui notifier le traitement de la requête ;
- la prise en main du boitier **5** de communication (ou de l'équipement **1**), suit alors par la suite le protocole TR-069, comme tout type de topologie réseau avec un CPE (ici le boitier **5** de communication).

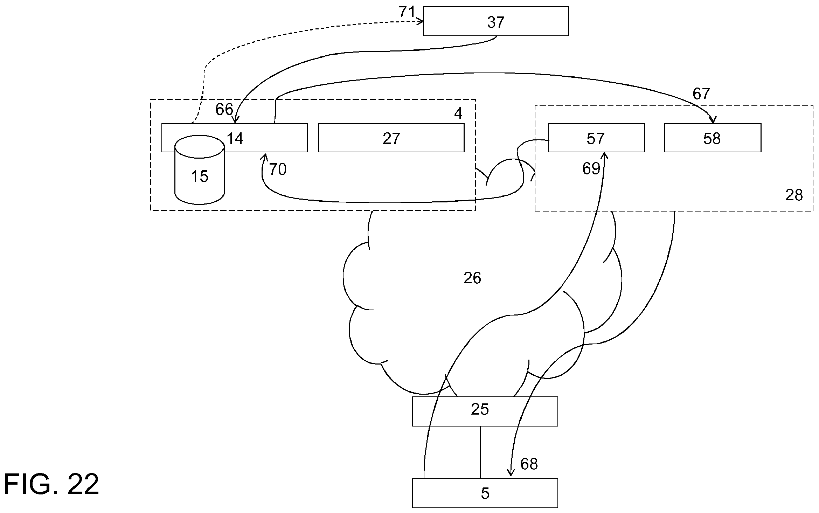

La figure 22, illustre pour la même architecture et le même protocole, les principaux flux de données permettant de transmettre une requête **16** d'action vers un actionneur associé à un équipement **1** :
- un acteur **37** externe tel un consommateur d'action envoie (flux **66**) une requête **16** d'action vers le gestionnaire **14** d'actions de la plateforme **4** centrale de données;
- le gestionnaire **14** d'actions stocke alors ladite requête **16** d'action dans la base **15** de données, puis envoie la requête **16** d'action via un message « *Action Request* » en XMPP (message de type « *XMPP IQ Stanza* ») au serveur **58** proxy XMPP. Avantageusement, le message « *Action Request* » comprend pour origine un identifiant Jabber autorisé et comme destinataire le boitier **5** de communication. Selon divers modes de réalisations, le message « *Action Request* » n'étant pas décrit dans la spécification TR-069, on peut s'inspirer de la structure du message « *Connection Request* » décrit dans l'annexe K.2.3.1 de cette spécification, pour implémenter ce message. Un exemple de réalisation du message « *Action Request* » est donné ci-dessous. Dans cet exemple, on spécifie notamment une requête **16** d'action (champs « *actionRequest* ») de type « *get* », un identifiant Jabber se rapportant à l'émetteur de la requête **16** d'action (champs *« from*=... »), ici le gestionnaire **14** d'actions, un identifiant Jabber pour un destinataire (champs « *to*=*...* ») de la requête **16** d'action, ici le boitier **5** de communication, un identifiant de message (champs « *id* ») et des informations de connexion tel un nom d'utilisateur et un mot de passe (champs « *username* », « *password* »), ces informations étant constitutives d'un message de type « *XMPP IQ Stanza* » (champs « *iq* ») : 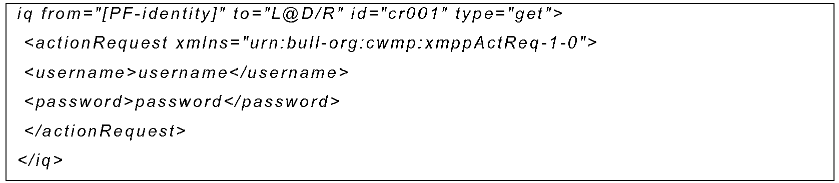
- le serveur **58** proxy XMPP, réceptionne le message « *Action Request* », puis agit alors comme un serveur de réveil (« *Wakeup server* »), en transmettant (flux **68**) ce message au boitier **5** de communication via le protocole XMPP. Par ailleurs, le serveur **58** proxy XMPP est capable de stocker ledit message si le boitier **5** de communication est déconnecté, puis le réémettre lors de la reconnexion du boitier **5** de communication ;
- le boitier **5** de communication réceptionne alors le message, et génère un message de réponse en XMPP (strophe XMPP « *XMPP IQ Stanza* ») de type « *résultat* » en cas de bonne prise en compte du message précédent, ou de type « *erreur* » sinon. Les structures de ces messages de réponse, sont respectivement détaillé dans l'annexe K.2.3.2 et K.2.3.3 de la spécification TR-069 ;
- le boitier **5** de communication initie ensuite une connexion http(s) afin de récupérer les demandes d'actions en attente. Cette connexion est établie (flux **69**) avec le serveur **57** proxy http de la plateforme **28** mandataire, qui lui-même va interroger (flux **70**) le gestionnaire **14** d'actions en vue de récupérer les demandes d'actions, par exemple via un message du type « *GET http* ». Avantageusement, l'utilisation du serveur **57** proxy http dans la plateforme **28** mandataire, permet alors d'optimiser les ressources de la plateforme **4** centrale de données, en lui évitant de multiples connexions http initiées directement depuis les différents boitiers **5** de communications ;
- le gestionnaire **14** d'action fournit alors en réponse les demandes d'action au boitier **5** de communication, via la connexion établie avec le serveur **58** proxy XMPP. Le gestionnaire **14** d'action gère, par ailleurs, la péremption des demandes d'actions selon deux modes :
   ∘ selon un mode asynchrone si le boitier **5** de communication n'est pas disponible, via le message XMPP de réveil transmis par le serveur **57** proxy http ;
   ∘ selon un mode synchrone, par une transmission en « temps-réel » des actions au boitier **5** de communication si celui est disponible (sous réserve de la validité temporelle de l'action, fonction par exemple d'un seuil temporel préconfiguré) ;
- le boitier **5** de communication exécute alors l'action demandée ou sinon la transmet à l'équipement **1** concerné pour exécution, puis retourne ensuite, par l'intermédiaire du serveur **57** proxy http, un compte-rendu au gestionnaire **14** d'action ;
- si demandé, le gestionnaire **14** d'actions notifie (flux **71**) alors à l'acteur **37** externe de la bonne exécution de sa demande d'action initiale par le boitier **5** de communication ou l'équipement **1** concerné.

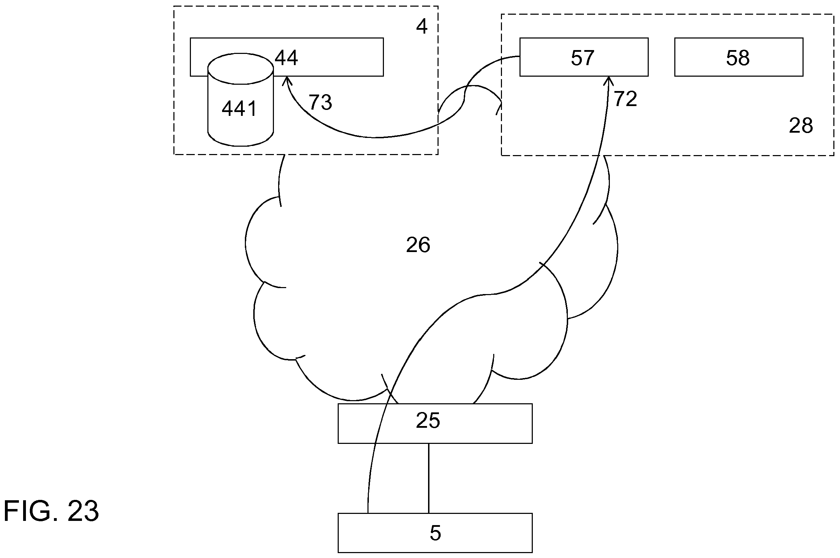

La figure 23, illustre encore pour la même architecture, les principaux flux de données permettant de remonter une mesure d'un capteur associé à un équipement **1.** Sur cette figure, la plateforme **4** centrale de données comprend, un gestionnaire **44** de mesures associé à une base **441** de donnée, permettant de gérer (stocker et/ou mettre à disposition) les données associées aux capteurs des différents équipements **1.** Le processus de remontée de mesure vers la plateforme **4** centrale de données depuis le capteur d'un équipement **1** connecté à un boitier **5** de communication est le suivant :
- le boitier **5** de communication récupère la mesure issue dudit capteur et transmise par l'équipement **1** ;
- le boitier **5** de communication initie (flux **72**) une connexion http(s) vers le serveur **57** proxy http de la plateforme **28** mandataire ;
- le serveur **57** proxy http initie alors une connexion http(s) vers le gestionnaire **44** de mesures de la plateforme **4** centrale de données ;
- le boitier **5** de communication envoie (flux **73**) alors au serveur **57** proxys http, via la connexion http(s) établie, la mesure par un message indiquant que la cible est le gestionnaire **44** de mesures, par exemple en utilisant un message du type « GET http (s*)* ».

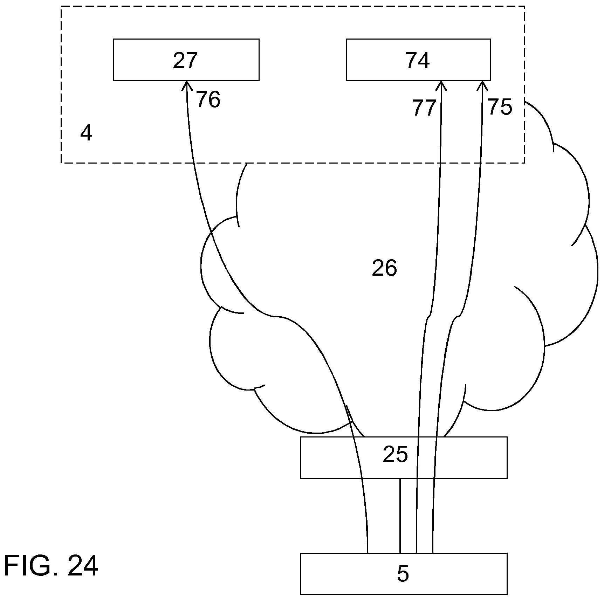

La figure 24 illustre les principaux flux mis en oeuvre pour l'établissement d'un tunnel, pour un mécanisme de communication entre le boitier **5** de communication et la plateforme **4** centrale de données, pour un mécanisme de communication implémentant le protocole STUN. Tout comme précédemment :
- le boitier **5** de communication est interfacé avec un dispositif **25** d'accès intégré IAD, via premier un port de communication, le boitier **5** de communication étant uniquement adressable via une adresse privée. Cette adresse privée est à titre d'exemple adressable via un passerelle/fonction de traduction d'adresse réseau NAT constitutive du dispositif **25** d'accès intégré IAD ;
- le dispositif **25** d'accès intégré IAD dispose d'un deuxième port de communication, lui permettant d'être adressable depuis un réseau **26** externe, par exemple un réseau internet, via une adresse publique ;
- la plateforme **4** centrale de données comprend un gestionnaire **14** d'actions associé à une base **15** de données (non-représentés sur cette figure), ainsi qu'un serveur **27** d'auto-configuration ACS tel que décrit dans la spécification TR-069.

Par ailleurs, la plateforme **4** centrale de données comprend un serveur **74** STUN, en accord avec la spécification TR-111. Comme exposé plus loin, un tel serveur permettra d'établir un « tunnel » de réveil entre la plateforme **4** centrale de données et le boitier **5** de communication.

L'établissement de la connexion entre le boitier **5** de communication et la plateforme **4** centrale de données est maintenant décrit. L'établissement de cette connexion survient à chaque initialisation du boitier **5** de communication et comprend les étapes suivantes :
- lors de son initialisation, le boitier **5** de communication se déclare à la plateforme **4** centrale de données par le serveur **27** d'auto-configuration ACS via le protocole de gestion TR-069 ;
- le boitier **5** de communication est alors pris en compte par la plateforme **4** centrale de données, et celle-ci active dans le boitier **5** de communication l'utilisation du protocole STUN ;
- le boitier **5** de communication émet (flux **75**) alors des requêtes de liaisons STUN « *STUN Binding Requests* » à destination du serveur **74** STUN de la plateforme **4** centrale de données, en accord avec la partie 2.2 de la spécification TR-111. Les réponses du serveur **74** STUN à ces requêtes, permettent alors au boitier **5** de communication de découvrir l'adresse publique du dispositif **25** d'accès intégré IAD. Le boitier **5** de communication transmet (flux **76**) alors l'adresse publique identifiée du dispositif **25** d'accès intégré IAD, au serveur **27** d'auto-configuration ACS via le protocole de gestion TR-069. Avantageusement, l'identification de l'adresse publique du dispositif **25** d'accès intégré IAD, permet au boitier **5** de communication de découvrir la présence d'une passerelle/fonction NAT dans le dispositif **25** d'accès intégré IAD, et d'établir au travers cette passerelle/fonction une connexion UDP avec le serveur **74** STUN ;
- afin de maintenir cette connexion ouverte, le boitier **5** de communication, envoie (flux **77**) alors par la suite périodiquement un message de requête de liaison STUN de type « *Binding Request* ». Avantageusement, cette période est configurée de manière à ce que le dispositif **25** d'accès intégré IAD ne désactive pas la fonction NAT suite à une période d'inactivité, et soit à la fois suffisamment longue afin d'éviter la saturation en ressources du serveur **74** STUN. Ainsi, dans un mode de réalisation, le boitier **5** de communication effectue un mécanisme d'apprentissage, en émettant initialement des messages de requête de connexion « *Binding Request* » avec une période faible, puis en augmentant progressivement la période d'émission de ces messages. On détermine ainsi une période limite pour laquelle le boitier ne reçoit plus de réponse de connexion « *Binding Response* » de la part du serveur **74** STUN. A partir de cet état, la période identifiée comme utilisable par le boitier **5** de communication est la période précédent cette période limite.

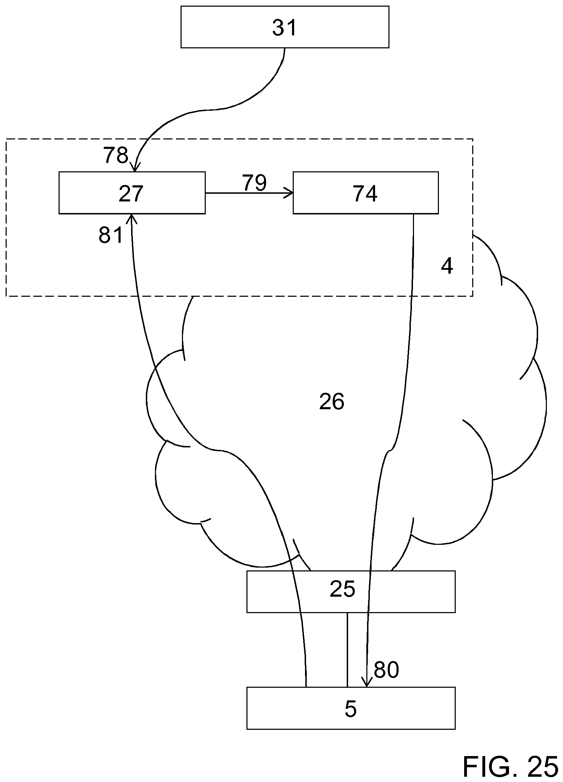

La figure 25, illustre pour le mécanisme précédent, les principaux flux de données permettant la prise en main à distance du boitier **5** de communication et/ou des équipements **1** :
- tout d'abord un acteur **31** externe tel un fournisseur **7** de services utilisateurs envoie (flux **78**) une requête de prise en main au serveur **27** d'auto-configuration ACS;
- le serveur **27** d'auto-configuration ACS contacte (flux **79**) le serveur **74** STUN, en accord avec la spécification TR-111, et lui demande d'envoyer un message de requête de connexion « *Connection Request* » selon le protocole UDP, à destination du boitier **5** de communication. La réalisation d'un tel message est décrite dans la partie 2.2.2.3 de cette spécification. Le serveur **74** STUN est alors le seul élément autorisé par le dispositif **25** d'accès intégré IAD à utiliser la fonction de traduction d'adresse réseau NAT vers le boitier **5** de communication. En effet, suite à l'établissement de la connexion avec le serveur **74** STUN, le dispositif **25** d'accès intégré IAD ne connait que l'adresse relative au serveur **74** STUN ainsi que le port UDP utilisé avec ce serveur ;
- le serveur **74** STUN envoie (flux **80**) ensuite au boitier **5** de communication un message UDP de requête de connexion « *Connection Request* », vers le port UDP public du dispositif **25** d'accès intégré IAD (utilisé par la fonction/passerelle de traduction d'adresse réseau NAT pour établir la connexion avec le boitier **5** de communication). Le dispositif **25** d'accès intégré IAD transmet alors ce message au boitier **5** de communication via la fonction/passerelle de traduction d'adresse réseau NAT ;
- le boitier **5** de communication traite alors l'ordre et émet en retour un message « *Inform request* », en accord avec la norme TR-069, à destination du serveur **27** d'auto-configuration ACS (flux **81**) pour lui notifier le traitement de la requête ;
- la prise en main du boitier **5** de communication (ou de l'équipement **1**), suit alors par la suite le protocole TR-069, comme tout type de topologie réseau avec un CPE (ici le boitier **5** de communication).

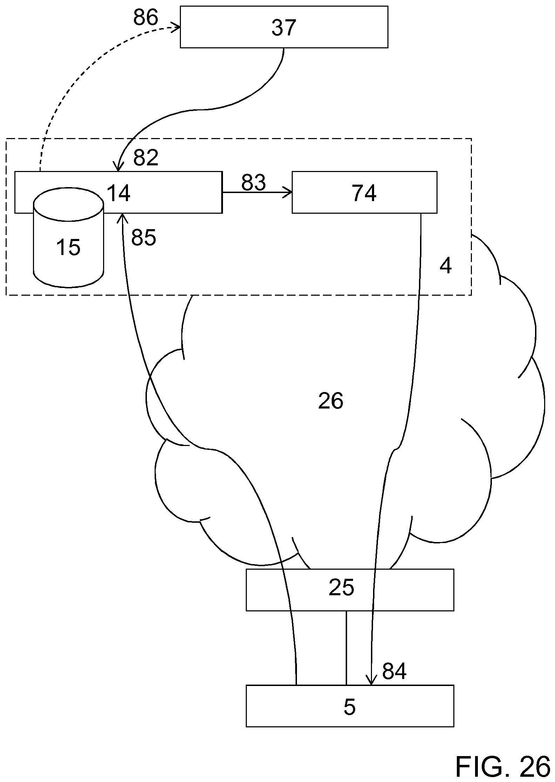

La figure 26, illustre pour le même mécanisme, les principaux flux de données permettant de transmettre une requête **16** d'action vers un actionneur associé à un équipement **1** :
- un acteur **37** externe tel un consommateur d'action envoie (flux **82**) une requête **16** d'action vers le gestionnaire **14** d'actions de la plateforme **4** centrale de données ;
- le gestionnaire **14** d'actions stocke alors ladite requête **16** d'action dans la base **15** de données, puis contacte alors le serveur **74** STUN (flux **83**), en accord avec la spécification TR-111, et lui demande d'envoyer un message « *Action Request* » en UDP, à destination du boitier **5** de communication. Selon divers modes de réalisations, le message « *Action Request* » n'étant pas décrit dans la spécification TR-111, on peut s'inspirer de la structure du message « *Connection Request* » décrit dans la partie 2.2.2.3 de cette spécification, pour implémenter ce message. Un exemple de réalisation du message « *Action Request* » est donné ci-dessous. Celui-ci spécifie un chemin non-vide associé à l'identifiant uniforme de ressource dit « *URI* » de ce message. Pour construire ce message, on ajoute le chemin surligné « *ActionRequest* », entre un champ de type « *hostname* », ici « *10.1.1.1:8080* », et les arguments de ce message spécifiés après le « *?* » :
   *http:*//*10.1.1.1:8080*/*ActionRequest?ts*=*11206**7**3**7**00&id*=*123**4**&un*=*CPE5**7**689&cn*=*XTG RWIPC6D3IPXS3&sig*=*35**4**5F**7**B5820D**7**6A3DF**4**5A3A509DA8D8C38F13512*
- Le serveur **74** STUN est alors le seul élément autorisé par le dispositif **25** d'accès intégré IAD à utiliser la fonction NAT vers le boitier **5** de communication. En effet, suite à l'établissement de la connexion avec le serveur **74** STUN, le dispositif **25** d'accès intégré IAD ne connait que l'adresse relative au serveur **74** STUN ainsi que le port UDP utilisé avec ce serveur ;
- le serveur **74** STUN envoie (flux **84**) ensuite au boitier **5** de communication un message UDP de requête d'action « *Action Request* », vers le port UDP public du dispositif **25** d'accès intégré IAD (utilisé par la fonction/passerelle de traduction d'adresse réseau NAT pour établir la connexion avec le boitier **5** de communication). Le dispositif **25** d'accès intégré IAD transmet alors ce message au boitier **5** de communication en appliquant la fonction de traduction d'adresse réseau NAT ;
- le boitier **5** de communication réceptionne le message et émet un message de prise en compte (réponse d'action) « *Action Response* », en accord avec la norme TR-111, à destination du serveur **74** STUN. Avantageusement, le message « *Action Response* », est un message UDP réalisé de manière similaire au message « *Action Request* », via l'utilisation d'un chemin non vide. Un exemple de réalisation pour ce message est donné ci-dessous :
   *http:*//*10.1.1.1:8080*/*ActionRequest?ts*=*1120673700&id*=*1234&un*=*CPE57689&cn*=*XTG RWIPC6D3IPXS3&sig*=*3545F7B5820D76A3DF45A3A509DA8D8C38F13512*
- Tant que le serveur **74** STUN ne reçoit pas cette réponse d'acquittement « *Action Response* », par exemple lorsque la fonction NAT UDP n'est pas établi, le serveur **74** STUN est configuré pour réémettre périodiquement le message UDP « *Action Request* » ou attendre le rétablissement de la fonction de traduction d'adresse réseau NAT ;
- le boitier **5** de communication initie ensuite (par voie montante) une connexion http(s) vers le gestionnaire **14** d'actions (flux **85**) afin de récupérer les demandes d'actions en attente ;
- le gestionnaire **14** d'action fournit alors en réponse les demandes d'action au boitier **5** de communication, tout en gérant la péremption des demandes d'actions selon deux modes :
   ∘ selon un mode asynchrone si le boitier **5** de communication n'est pas disponible, via un message UDP de réveil ;
   ∘ selon un mode synchrone, par une transmission en « temps-réel » des actions au boitier **5** de communication si celui est disponible (sous réserve de la validité temporelle de l'action, fonction par exemple seuil temporel préconfiguré) ;
- le boitier **5** de communication exécute alors l'action demandée ou sinon la transmet à l'équipement **1** concerné pour exécution, puis retourne ensuite un compte-rendu au gestionnaire **14** d'action;
- si demandé, le gestionnaire **14** d'actions notifie (flux **86**) alors à l'acteur **37** externe de la bonne exécution de sa requête **16** d'action initiale par le boitier **5** de communication ou l'équipement **1** concerné.

Par ailleurs, pour cette architecture, les principaux flux de données permettant de remonter une mesure d'un capteur associé à un équipement **1,** vers le gestionnaire **44** de mesures de plateforme **4** centrale de données, sont les mêmes que ceux de la figure 19, décrivant ces flux pour un mécanisme implémentant l'UPnP :
- le boitier **5** de communication récupère la mesure issue dudit capteur et transmise par l'équipement **1** ;
- le boitier **5** de communication initie (flux **56**) ensuite une connexion, par exemple de type « http(s) » vers le gestionnaire **44** de mesures de la plateforme **4** centrale de données ;
- le boitier **5** de communication transmet finalement la mesure par un message indiquant que la cible est le gestionnaire **44** de mesures, par exemple en utilisant un message du type « *GET http(s)* ».

Les enjeux techniques et modes de réalisations concernant le boitier **5** de communication sont maintenant décrits. Comme exposé précédemment, un boitier **5** de communication (de type « *box* ») est déployé dans un environnement ou lieu physique déterminé, comprenant un ou plusieurs équipements **1,** chacun de ces équipements **1** proposant des services utilisateurs. Avantageusement, chaque boitier **5** de communication sert :
- de passerelle protocolaire entre les réseaux (filaires ou sans fils) des équipements **1** locaux, capteurs, actionneurs et la plateforme **4** centrale de données, cette dernière accessible via un réseau **26** externe depuis un dispositif **25** d'accès intégré IAD ;
- à l'exécution de services, lorsqu'il est préférable de les exécuter localement plutôt qu'au niveau de la plateforme **4** centrale de données, par exemple pour des raisons d'autonomie des équipements **1.**

Le boitier **5** de communication est par ailleurs partagé entre plusieurs acteurs, par exemples des vendeurs d'équipements **1** ou des fournisseurs **7** de services utilisateurs. Par conséquent, le boitier **5** de communication héberge des composants logiciels communs et spécifiques (notamment les services utilisateurs) auxdits acteurs, permettant de gérer la communication avec les différents équipements **1** ou effectuer un traitement de données local sur les données issues de ces équipements **1.** On parle couramment, dans ce contexte, d'architecture « multi-tenants ». Le boitier **5** de communication implémente ainsi une plateforme intergicielle de services. Sur cette plateforme, les fonctions propres à chaque acteur, à titre d'exemple le protocole de communication employé avec un équipement **1** ou le traitement spécifique de données associées à un équipement **1,** sont déployées par les acteurs sous la forme de composants logiciels orientés services. Une défaillance ou un détournement d'un composant logiciel associé à un acteur, ne doit donc pas impacter et dégrader les comportements des composants logiciels relatifs aux autres acteurs hébergés sur une même plateforme. A titre d'exemple, un débordement mémoire résultant d'une anomalie de codage d'un service ne doit pas se propager dans la plateforme, sous risque de provoquer l'interruption (« *crash* ») des autres services. En outre, en l'absence de standard, les équipements **1** connectés au boitier **5** de communication sont hétérogènes et basés sur des protocoles de communication différents. Ainsi, couramment un composant logiciel communicant initialement avec équipements **1** selon un protocole, devra évoluer lorsque l'équipement **1** change car le protocole associé se voit aussi évoluer. En outre, le changement d'un équipement **1** peut aussi engendrer une modification de la méthode d'accès du boitier **5** de communication aux données de l'équipement **1.** A titre d'exemple, le boitier **5** de communication accède initialement aux données d'un équipement **1** via une méthode de type « *pull* » : l'équipement **1** expose une interface de programmation applicative API et le boitier **5** de communication prend l'initiative de récupérer les mesures d'un capteur associé à cet équipement **1.** Un changement de cet équipement **1** entraine alors l'utilisation d'une méthode d'accès de type « *push* » : les données sont poussées à l'initiative de l'équipement **1** vers le boitier **5** de communication. Par conséquent, le composant logiciel permettant de communiquer avec cet équipement doit lui aussi évoluer.

Ainsi, pour parer à ses inconvénients on réalise dans le boitier **5** de communication, une plateforme logicielle de services fondée sur le langage Java et en accord avec la norme OSGi (acronyme anglais de « *Open Services Gateway initiative* »), multi-tenant et intégrant une interface de programmation applicative API unifiée d'accès aux équipements **1** ou services connectés. Avantageusement, une telle plateforme logicielle permet d'assurer :
- une fiabilité et une isolation forte entre les composants logiciels d'utilisateurs différents ;
- une indépendance des services applicatifs vis-à-vis des protocoles de communication avec les équipements **1** ou les services de données ;
- une indépendance des services applicatifs vis-à-vis des méthodes d'accès (ex : « *pull* », « *push* ») aux équipements **1** ou aux services de données.

Une telle plateforme logicielle est réalisée par l'agrégation :
- d'une couche d'accès aux équipements **1** connectés, dont la réalisation est décrite ultérieurement ;
- d'une plateforme java multi-tenants assurant l'isolation entre les services hébergés par la plateforme. On peut pour ce type de plateforme, s'appuyer sur des plateformes existantes de l'état de l'art. A titre d'exemple, on réalise une plateforme Java/OSGi basée sur un modèle Haas (acronyme anglais de « *Hardware* as a *Service* ») via des composants applicatifs disposés dans un conteneur partagé dit « *Kernel* » et dans des conteneurs séparés et étanches dit « *Features* ». Avantageusement, une telle plateforme est réalisée de sorte à ce que l'espace mémoire alloué à chaque conteneur ne soit accessible, que si ce dernier est configuré pour en autoriser l'accès. L'accès d'un utilisateur autorisé à un conteneur, par exemple lors de l'invocation d'une méthode, s'effectue alors au travers d'une interface applicative de programmation API, qui limite l'accès de l'utilisateur au strict nécessaire. Il est ainsi impossible d'utiliser des techniques de débordement de pile pour contourner le contrôle et accéder illicitement à la zone mémoire du conteneur depuis l'extérieur. Avantageusement, la mémoire du conteneur ne peut être ni accédée ni corrompue depuis l'extérieur du conteneur, le conteneur partagé « *Kernel* » et les conteneurs étanches « *Features* » s'exécutant au sein d'une machine virtuelle Java JVM, et celle-ci n'autorisant en son sein que l'exécution de conteneurs isolés ou ne communicant qu'au travers de méthodes explicitement exposées et contrôlées. Le code de programmation des composants du « *Kernel* » est alors considéré comme fiable (ne comportant pas d'anomalies), tandis que les services utilisateurs sont regroupés dans des « *Features* » distinctes propres à chaque fournisseur. Avantageusement, une telle structure garantit alors une isolation forte entre les services utilisateurs, prévenant que toute défaillance d'un service ait un impact sur les autres, assure une gestion des ressources matérielles (ex : occupation mémoire, ressources de calcul) par « *Feature* » et limite la propagation d'erreur de tout composant logiciel.

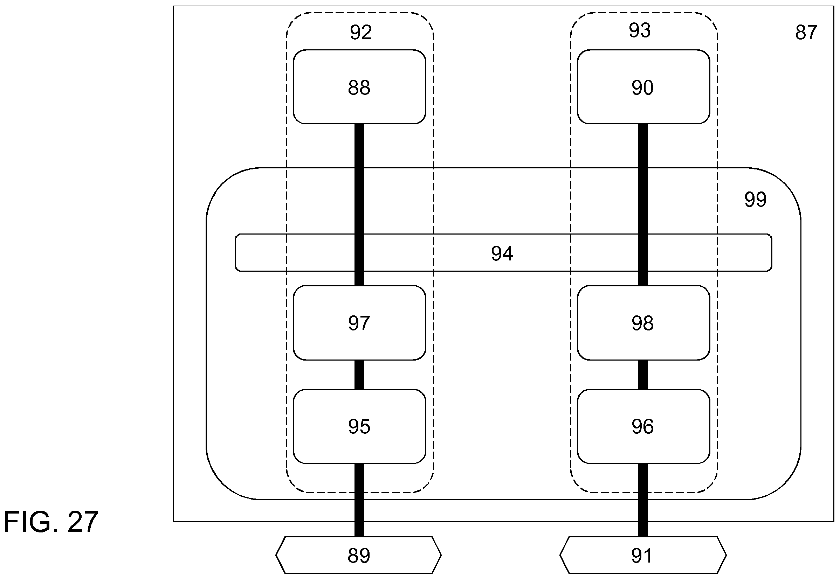

La figure 27 illustre le concept de fonctionnement d'une plateforme **87** logicielle avec les caractéristiques précédemment décrites. La plateforme **87** logicielle est une plateforme partagée entre plusieurs utilisateurs, deux dans cet exemple, et héberge l'ensemble des services des utilisateurs se rapportant chacun un équipement. Dans cet exemple, un premier service **88** se rapporte à un premier équipement **89,** et un deuxième service **90** se rapporte à un deuxième équipement **91.** Le premier équipement **89** et le deuxième équipement **91** sont connectés de manière externe à la plateforme **87** logicielle du boitier **5** de communication, et utilisent pour leurs échanges respectivement un premier et un deuxième protocole. Par ailleurs, dans un autre mode de réalisation, tout service distant/éloigné, accessible via une interface de programmation applicative API, peut se substituer à un équipement **89, 91.** On entend, ici, par service distant/éloigné tout service permettant de généraliser une source de donnée tel un équipement **89,91** ou encore tout service déployé dans le « Nuage » de type « logiciel en tant que service » dit SaaS, acronyme anglais de « *Software* as a *Service* ». Par exemple, l'élément **91** peut être un service distant en lieu et place du deuxième équipement, ce service faisant appel au deuxième protocole. Avantageusement, les composants logiciels spécifiques, comprenant les services **88, 90,** propres à chaque utilisateur sont respectivement isolés dans des conteneurs **92, 93** étanches, couramment désignés sous l'appellation « *sandbox* » ou « *Feature* ». Une interface **94** de programmation applicative API unifiée permet alors l'accès aux équipements **89, 91** ou à des services distants depuis les services **88, 90** applicatifs, ou plus généralement à tout élément logiciel ou matériel extérieur, dit « *eThing* », connecté à la plateforme **87** logicielle du boitier **5** de communication. Ainsi, pour assurer à la fois le support d'éléments (ex : équipements **89, 91** ou services distants) gérés par un utilisateur, et le support des protocoles de communication associés à ces éléments, on déploie entre l'interface **94** de programmation applicative API unifiée et tout élément « *eThing* », un adaptateur protocolaire relatif au protocole de l'élément, ainsi qu'un adaptateur d'élément, dit adaptateur « *eThing* », ces adaptateurs se présentant sous forme de composants logiciels, tels des services OSGi.

Ainsi, dans l'exemple illustré, un premier et un deuxième adaptateur **95, 96** protocolaire est respectivement associé au premier et au deuxième équipement **89,91,** chacun de ces adaptateurs étant respectivement interfacé avec un premier et un deuxième adaptateur **97,98** « *eThing* », ces adaptateurs implémentant l'interface **94** de programmation applicative API unifiée. Avantageusement, les adaptateurs spécifiques à un même équipement sont isolés dans un même conteneur étanche (« *Feature* »). Par exemple, les adaptateurs **95, 96** protocolaire et les adaptateurs **97, 98** d'élément « *eThing* » sont respectivement déployés dans les conteneurs **92, 93.** Cependant, un même adaptateur de protocole peut éventuellement être partagé entre plusieurs utilisateurs. Avantageusement, l'interface **94** de programmation applicative API unifiée, les adaptateurs **95, 96** protocolaires et les adaptateurs **97, 98** d'éléments « *eThing »* constituent ainsi une structure **99** (« *framework* ») d'accès unifié, c'est-à-dire une couche d'accès aux équipements **1, 89, 91** connectés.

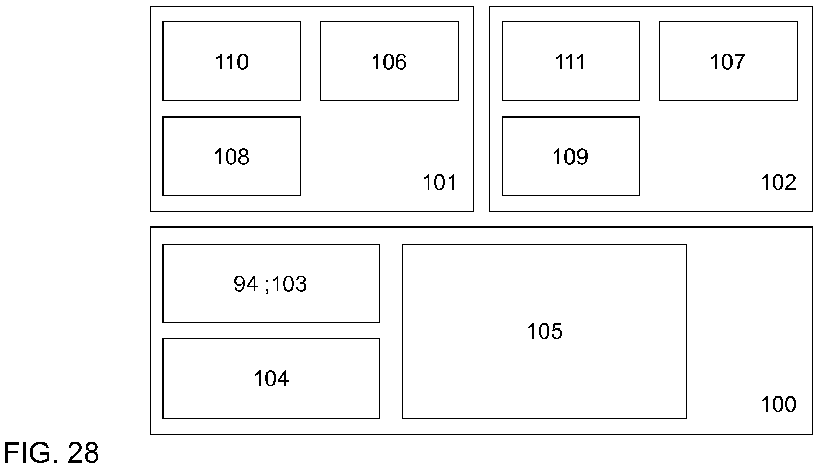

La figure 28 illustre un exemple de répartition des éléments de la plateforme **87** logicielle précédemment décrite, combinée avec une approche Java/OSGi basée sur un modèle Haas (acronyme anglais de « *Hardware* as a *Service* ») réalisé par des composants applicatifs disposés dans un conteneur **100** partagé dit « *Kernel* », et dans des conteneurs **101, 102** séparés et étanches dit « *Features* ». Dans cet exemple :
- le conteneur **100** partagé « *Kernel* », réputé fiable, embarque
   ∘ des interfaces **103** Java constitutives de l'interface **94** de programmation applicative API unifiée, détaillées ultérieurement, et des classes de données correspondant aux objets échangés au niveau de l'interface **94** programmation applicative, par exemple des classes de données structurées (ex : binaires, booléennes) remontées par les équipements **1, 89, 91** ;
   ∘ des adaptateurs **104** protocolaires partagés par tous les utilisateurs, c'est-à-dire partagés par différents services, par exemple des adaptateurs Zigbee, ou de ports série ;
   ∘ des services **105** communs utilisateurs, par exemple un moteur de règles, et un service de publication des données vers une interface de type REST (acronyme de « *Representational State Transfer* ») ;
- chaque conteneur **101, 102** séparé « *Features* » (composants logiciels), spécifique à un utilisateur, embarque
   ∘ des services **106, 107** spécifiques à un utilisateur, par exemple des services de prétraitement sur les données d'un équipement **1, 89, 91** ;
   ∘ des adaptateurs **108, 109** protocolaires spécifiques à leur équipement ;
   ∘ des adaptateurs **110, 111** d'éléments « *eThing* » implémentant l'interface **94** de programmation applicative API unifiée.

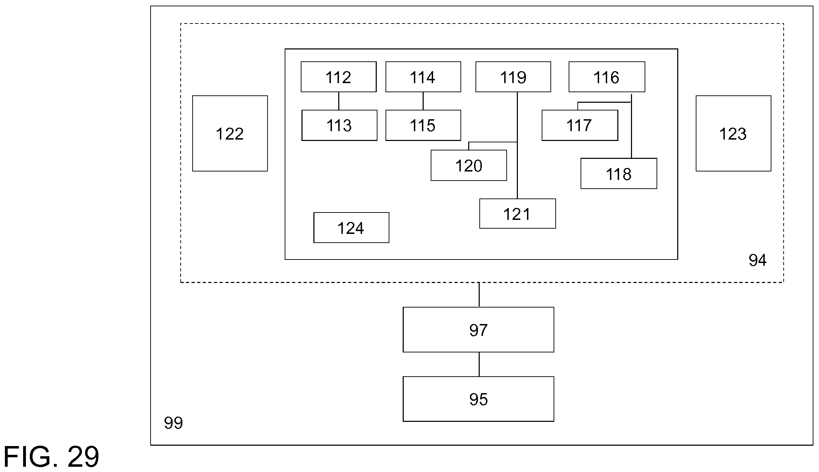

La figure 29 illustre la réalisation de la structure **99** (« *framework* ») d'accès unifié, comprenant l'interface **94** de programmation applicative API unifiée. Cette dernière est interfacée avec un adaptateur d'éléments « *eThing* via une interface désignée par la suite comme interface **112** d'élément « *eThing* », cette interface étant un service OSGi. Dans cet exemple, l'adaptateur d'éléments « *eThing* » est l'adaptateur **97** d'éléments « *eThing* » du premier équipement **89** (non-représenté). L'adaptateur **97** d'éléments « *eThing* » est lui-même interfacé avec l'adaptateur **95** protocolaire. L'interface de programmation applicative API **94** unifiée, l'adaptateur d'éléments « *eThing* » **97** et l'adaptateur protocolaire **95** sont donc constitutifs de la structure **99** d'accès unifié. Dans cette structure, chaque équipement **89,** ou plus généralement tout élément connecté « *eThing* », est représenté dans la structure **99** d'accès unifié par un service OSGi implémentant l'interface **112** d'élément « *eThing* », ce service comportant les attributs suivants : un état, un identifiant unique, un nom, un vendeur, une version, un numéro de série, une description.

Ainsi, dans l'exemple ci-dessous, un adaptateur **97** d'éléments « *eThing* » implémente l'interface OSGi « *eThing* », est interfacé avec un adaptateur **95** protocolaire via une méthode « *bindProtocolAdapter()* », cette méthode étant apte à associer tout adaptateur **95** protocolaire avec tout élément « *eThing »,* et comprend pour champs : un état « *Status* », un identifiant unique « *UID* », un nom « *NAME* », un vendeur « *VENDOR* », une version « *VERSION* », un numéro de série « *SERIAL_NUMBER* », une description « *DESCRIPTION* »

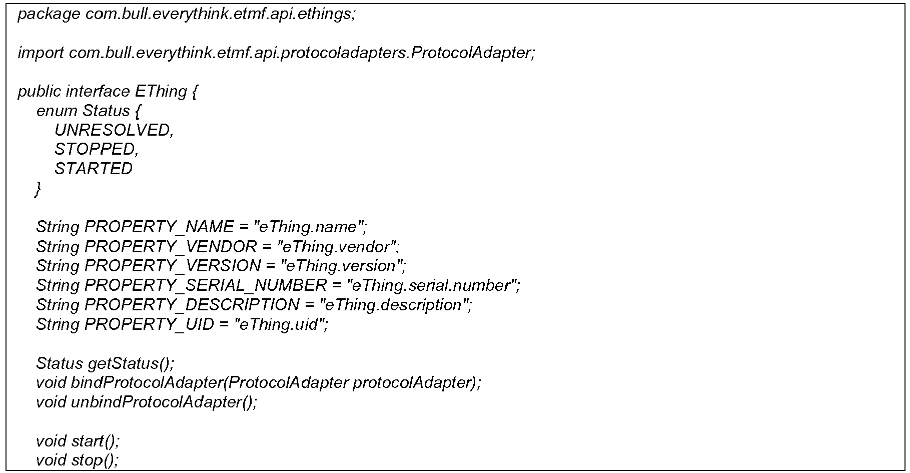

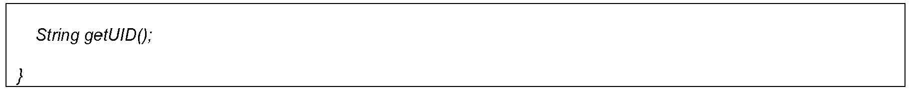

Les fonctions de l'équipement **1, 89, 91** (ou du service) sont quant à elles représentées par des services OSGi implémentant une interface **113** abstraite de fonction d'éléments nommée « *eThingFunction* » et trois interfaces de bases :
- une interface **114** d'alarme nommée « *Alarm* », permettant de générer les alarmes issues de l'équipement, ces alarmes étant décrites par une classe **115** nommée « *AlarmData* »;
- une interface **116** de contrôle « *Control* », permettant de contrôler l'état d'un équipement et/ou d'agir dessus, et comprenant deux fonctions
   ∘ une fonction **117** de contrôle binaire nommée « *BinaryControl* », dans le cas où l'état associé au capteur d'un équipement est de type binaire. La valeur de cet état est alors représentée par une classe nommée « *BinaryData* » ;
   ∘ une fonction **118** de contrôle multi-niveau nommée « *MultiLevelControl* », dans le cas où l'état du capteur associé à un équipement comprend plusieurs états (multivalué). La valeur de cet état est alors représentée par une classe nommée « *MultiLevelData* » ;
- une interface **119** de capteur nommée « *Sensor* », permettant de collecter, périodiquement ou non, une valeur issue d'un capteur d'un équipement **1, 89, 91,** selon deux fonctions :
   ∘ une fonction **120** de capteur binaire nommée « *BinarySensor* », si le capteur associé est de type binaire. La valeur est alors représentée par la classe nommée « *BinaryData* » ;
   ∘ une fonction **121** de capteur multi-niveau nommée « *MultiLevelSensor* », si le cas capteur associé est multivalué. La valeur est alors représentée par la classe nommée « *MultiLevelData* ».

Des exemples de réalisation de l'interface **113** abstraite de fonction d'éléments « *eThingFunction* », de l'interface de base « *Alarm* » et de la classe « *AlarmData* » sont donnés ci-dessous :

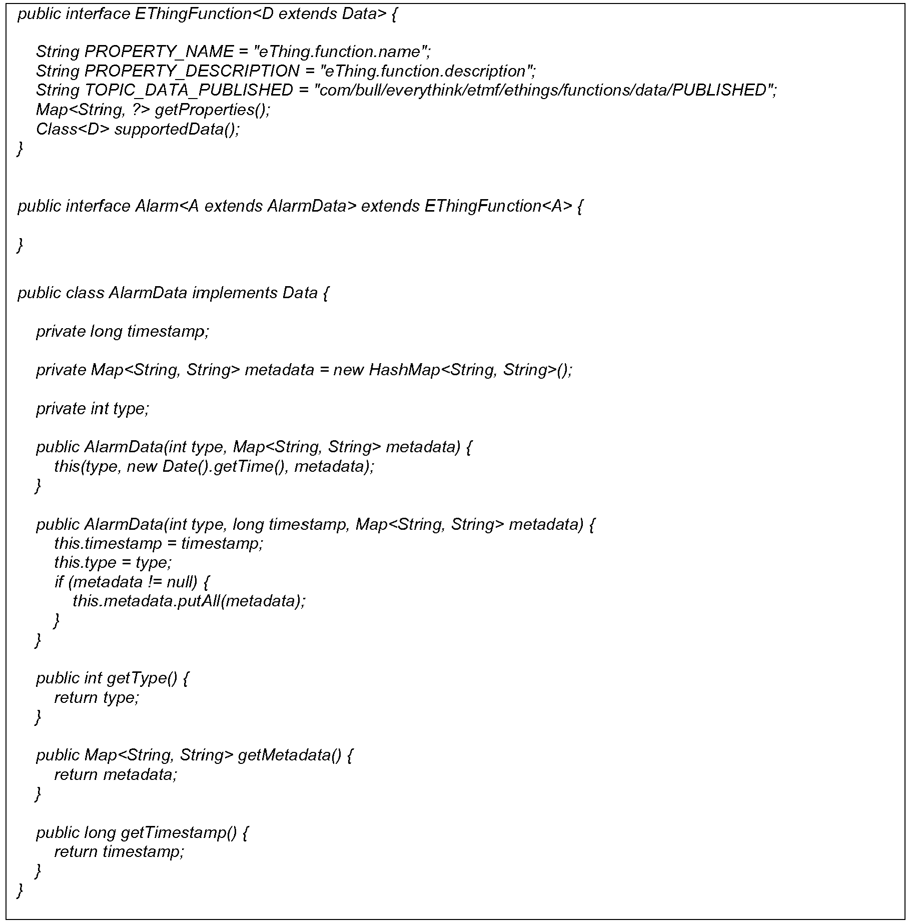

Avantageusement, un nouvel équipement **1, 89, 91** ou service ajouté est supporté dans le système par l'ajout adaptateur **97** d'éléments « *eThing* », via une classe « *eThingAdapter* » implémentant les interfaces précédemment décrites.

Ainsi, pour la communication avec le premier équipement **89,** l'adaptateur **97** d'éléments « *eThing* » est connecté à l'adaptateur **95** protocolaire, ce dernier exposant un service avec une interface OSGi adaptée au protocole de communication spécifique de cet équipement **89.** Avantageusement, les interfaces spécifiques adaptées aux protocoles de communication, comportent deux interfaces de base nommées « *CommProtocolAdapter* » et « *ProtocolAdapterFactory* ».

Chaque service de l'interface « *ProtocolAdapter* » expose au moins les deux propriétés suivantes : type, vendeur.
Chaque type d'adaptateur **95** protocolaire définit alors une interface OSGi qui étend l'interface « *CommProtocolAdapter* ». Par étendre une interface (composée de méthodes, paramètres et valeurs de retour associés), on entend, ici, reprendre une interface existante à un niveau d'abstraction plus générique, et à lui ajouter de nouvelles méthodes qui lui sont propre. En outre, on associe à chaque adaptateur protocolaire un fabrique d'adaptateur protocolaire, dite « *Protocol Adapter Factory* » (PAF), permettant de créer un adaptateur protocolaire avec des propriétés appropriées. Avantageusement, chaque fabrique d'adaptateur protocolaire PAF définit une interface qui étend l'interface « *ProtocolAdapterFactory* ». L'adaptateur protocolaire créé par la fabrique d'adaptateur protocolaire PAF, est ensuite associé à un adaptateur d'élément « *eThing* ». L'adaptateur d'élément « *eThing* » pourra ensuite éventuellement notifier la fabrique d'adaptateur protocolaire PAF qu'il n'utilise plus l'adaptateur protocolaire, permettant ainsi de libérer des éventuelles ressources.

Un exemple de réalisation d'adaptateur **95** protocolaire, étendant la classe OSGi « *ProtocolAdapter* », présentant pour propriétés un type « *TYPE* » et un vendeur « *VENDOR* » est donné ci-dessous :

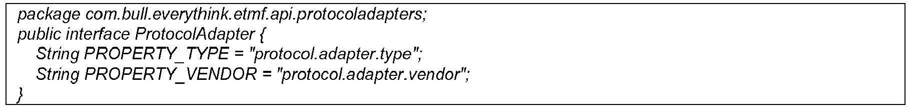

Pour cet exemple, chaque adaptateur protocolaire est associé à une fabrique d'adaptateur protocolaire PAF, étendant l'interface « *ProtocolAdapterFactory* » et réalisé de la manière suivante :

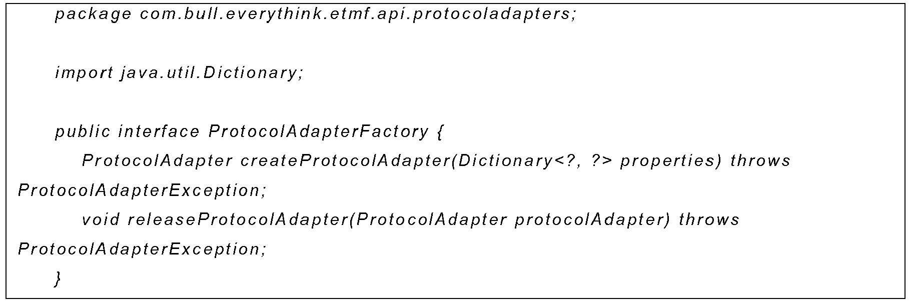

Par ailleurs, la structure **99** (« *framework* ») d'accès unifié, plus précisément l'interface **94** de programmation applicative, comprend les deux interfaces programmatiques suivantes :
- une interface **122** de publication/souscription nommée « *publish*/*subscribe* », permettant, selon un mode événementiel
   ∘ la réception asynchrone d'événements ou de données issues d'un équipement **1, 89, 91** ou d'un service, après une étape d'abonnement/souscription de l'utilisateur, vers la structure **99** (« *framework* ») d'accès unifié (ex : à destination d'un service **88, 90** spécifique) ;
   ∘ la publication asynchrone depuis la structure **99** (« *framework* ») d'accès unifié (ex : à partir d'un service **88, 90** spécifique), de données ou d'événements vers un équipement **1, 89, 91** ou service relatif à un ou plusieurs utilisateurs abonnés ;
- une interface **123** de requête nommée « *request* » permettant, selon un mode synchrone, la récupération, la lecture/l'écriture de données issues/à destination d'un équipement **1, 89, 91** ou service, vers/depuis la structure **99** (« *framework* ») d'accès unifié (ex : à destination/depuis un service **88, 90** spécifique).

Avantageusement, l'interface **123** de requête nommée « *request* » permet d'envoyer des requêtes sur les équipements **1, 89, 91** (services « *eThing* ») de lecture de données (message de type « *GET* ») ou d'écriture (message de type « *SET* » sur un attribut ou invocation d'une opération). Dans une mode de réalisation pour créer des requêtes vers un élément (équipement **1, 89, 91** ou service), on utilise une méthode statique, comprenant pour arguments l'identifiant « uid » de l'élément « eThing », ainsi que le nom de la fonction d'élément « *eThingFunction* ».

On utilise ensuite une méthode pour :
- lire les données sur un équipement (commande « *getData* ») : 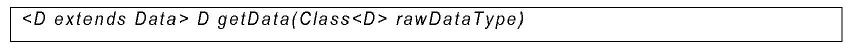
- écrire des données vers un équipement (commande « *sendData* ») :

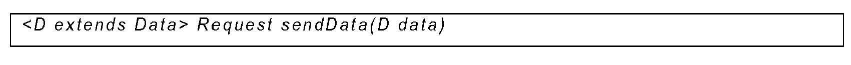

L'interface **122** de publication/souscription nommée « *publish*/*subscribe* », permet quant à elle :
- de produire des données sur cette interface en renseignant un identifiant d'équipement « *eThing »* : 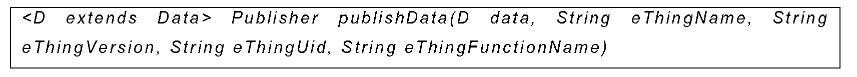 Avantageusement, ceci permet de réinjecter des données depuis un service applicatif ou de plus haut niveau que l'interface **94** de programmation applicative API unifiée sur cette interface, par exemple, depuis un moteur de traitement d'événements complexes CEP, acronyme anglais de « *Complex Event Processing* ». Un tel moteur CEP peut être à la fois consommateur et producteur de données sur l'interface **94** de programmation applicative API. Dans cet exemple, la production de données résulte de la création d'un nouvel événement par le moteur CEP (ex : par corrélation d'autres événements), ces données étant ensuite consommées par des applications via l'interface **122** de publication/souscription « *publish*/*subscribe* » ;
- de souscrire à des données produites sur des éléments « *eThings* », en définissant un filtre d'événement dit « *EventFilter* », permettant d'enregistrer un « écouteur » d'événement sur le service, couramment désigné par l'anglicisme « *listener* ». Lorsque des données correspondant au filtre sont publiées, on utilise une fonction de rappel, couramment désignés sous l'anglicisme « *callback* ». Avantageusement, la fonction de rappel « *callback* » permet d'implémenter une interface **124** d'événement relative à la fonction d'élément « *eThing* » dite interface **124** « *EThingFunctionEvent* » qui n'a qu'une seule méthode :

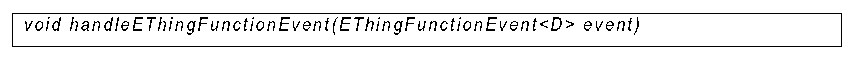

Un exemple d'utilisation de « *listener* », permettant à une application consommatrice de données d'un équipement **1, 89, 91** d'enregistrer un « callback » (oud' invoquer une méthode lorsque ses données seront disponibles) est donné ci-dessous :
est donné ci-dessous :

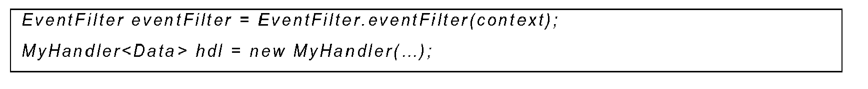

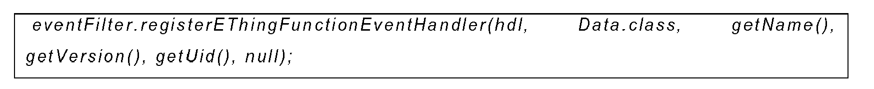

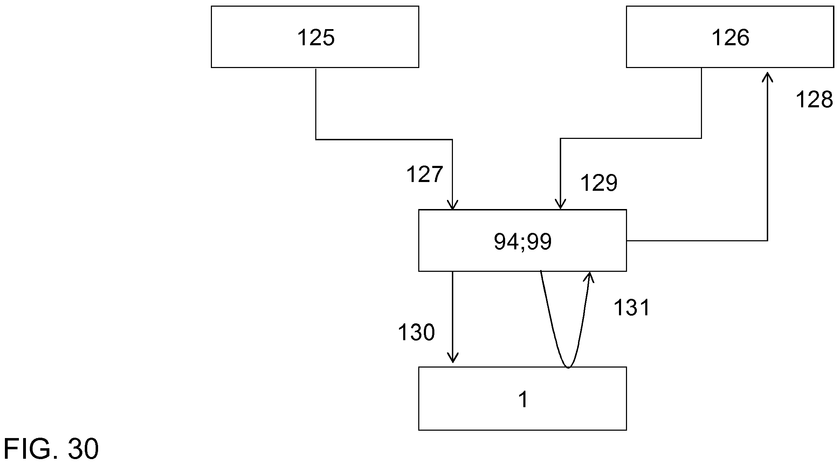

Avantageusement, l'ensemble des services applicatifs utilisateurs s'appuient sur l'interface **94** de programmation applicative API unifiée, permettant une abstraction des équipements **1, 89, 91** et des protocoles de communication sous-jacents. Ainsi, le remplacement d'un équipement **1, 89, 91,** par un nouvel équipement reposant sur un protocole de communication différent, mais proposant les mêmes services, c'est-à-dire les mêmes fonctions, n'a alors aucun impact sur le code du service utilisateur lié à l'interface **94** de programmation applicative API unifiée. En outre, l'interface **94** de programmation applicative API unifiée offre un moyen d'abstraire le mode d'accès aux équipements **1, 89, 91** qu'il soit synchrone (mode de données tirées « *pull* ») pour la lecture ou l'écriture de données, ou qu'il soit asynchrone ou lié à un événement (mode de données poussées « *push* ») pour la lecture de données issues des équipements **1, 89, 91,** via les interfaces **122, 123** de publication/souscription « *publish*/*subscribe* » et de requête « *request* ». Avantageusement, tout mode non implémenté nativement par un équipement **1, 89, 91** est alors simulé par la structure **99** (« *framework* ») d'accès unifié. La figure 30, illustre à titre d'exemple, un équipement **1** fonctionnant, selon un mode synchrone (mode tiré « *pull* »), interfacé avec la structure **99** (« *framework* ») d'accès unifié comprenant l'interface **94** de programmation applicative API unifiée, cette structure étant interfacé avec un premier service utilisateur **125** basé sur mode synchrone, et un deuxième service utilisateur **126** basé sur un mode asynchrone. Le premier service **125** utilisateur utilise donc l'interface **123** de requête « *request* », tandis que le deuxième service **126** utilisateur utilise l'interface **122** de publication/souscription « *publish*/*subscribe* » de l'interface de programmation applicative API **94** unifiée de la structure **99** (« *framework* ») d'accès unifié. Dans cet exemple, les modes de requêtes émanant du premier service **125** utilisateur sont représentés par la flèche **127,** tandis que les modes de publication/souscription *« publish*/*subscribe* » sont respectivement représentés par les flèches **128, 129.**

Le mode synchrone « *request* » en écriture et lecture, est implémenté par une simple délégation, c'est-à-dire par un simple appel de méthode, sur l'interface native de l'équipement **1** : on utilise alors des messages de type « *SET* » en écriture propagé (flèche **130**) sur l'équipement **1** et « *GET* » en lecture retournant la dernière valeur/donnée lue sur l'équipement **1.**

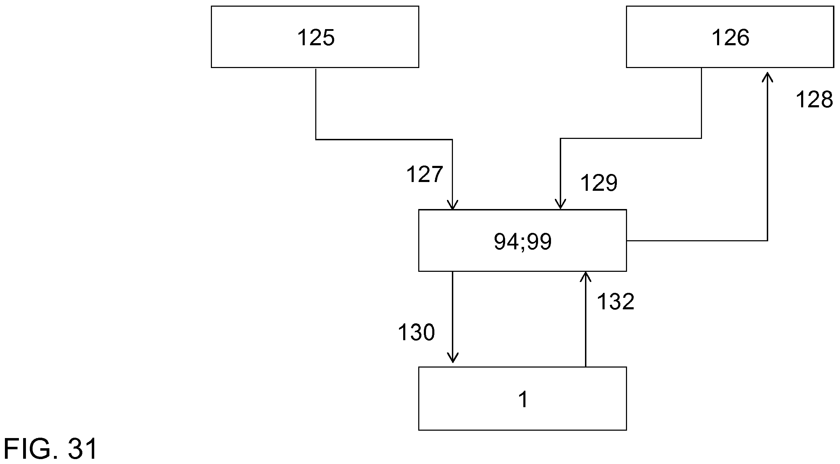

Le mode événementiel étant asynchrone, ce dernier mode est alors simulé par la structure **99** (« *framework* ») d'accès unifié en récupérant périodiquement (flèche **131**), via l'interface **123** de requête *« request* », les données sur l'équipement et en mémorisant la dernière donnée lue. Cette dernière donnée est alors envoyée vers l'interface **122** de publication/souscription « *publish*/*subscribe* ». Avantageusement, la période de collecte est configurable via l'interface **113** abstraite de fonction d'éléments « *eThingFunction* ». La figure 31, illustre, un équipement **1** fonctionnant, selon un mode événementiel (mode « *push* »), interfacé avec la structure **99** (« *framework* ») d'accès unifié comprenant l'interface **94** de programmation applicative API unifiée, cette structure étant interfacée avec un premier service **125** utilisateur basé sur mode synchrone, et un deuxième service **126** utilisateur basé sur un mode asynchrone. Le premier service utilisateur **125** utilise donc l'interface **123** de requête « *request* », tandis que le deuxième service **126** utilisateur utilise l'interface **122** de publication/souscription « *publish*/*subscribe* » de l'interface **94** de programmation applicative API unifiée de la structure **99** (« *framework* ») d'accès unifié. Dans cet exemple, les modes de requêtes émanant du premier service **125** utilisateur sont représentés par la flèche **127,** tandis que les modes de publication/souscription « *publish*/*subscribe* » sont respectivement représentés par les flèches **128, 129.** A la différence de l'exemple précédent, l'équipement **1** pousse ses données vers l'interface **122** de publication/souscription « *publish*/*subscribe* ». Ainsi, la flèche **128** se rapporte à la propagation des données que l'équipement **1** pousse (flèche **132**) à chaque nouvel événement. L'équipement **1** étant cette fois basé sur mode asynchrone, la structure **99** (« *framework* ») d'accès unifié simule cette fois le mode synchrone en mémorisant la dernière donnée poussée par l'équipement **1** via l'interface **122** de publication/souscription « *publish*/*subscribe* ». Cette donnée est alors envoyée vers l'interface **123** de requête « *request* ». Ensuite, comme précédemment, le mode synchrone « *request* » en écriture et lecture, est implémenté par une simple délégation sur l'interface native de l'équipement : on utilise alors des messages de type « *SET* » en écriture propagé (flèche **130**) sur l'équipement **1** et « *GET* » en lecture retournant la dernière valeur lue sur l'équipement **1.**

## Revendications

1. Méthode de communication entre un gestionnaire (14) d'action distant et au moins un boitier (5) de communication pour interagir avec un ou plusieurs équipements (1) connectés audit boitier (5) de communication, ce boitier (5) et cet équipement (1) étant compris dans un réseau local, le boitier (5) étant connecté audit gestionnaire (14) d'action distant par l'intermédiaire d'un dispositif (25) d'accès intégré disposant, ainsi que le gestionnaire (14) d'action distant, d'une adresse publique, le boitier (5) de communication disposant d'une adresse privée non adressable depuis le gestionnaire (14) d'action distant, cette méthode étant **caractérisée en ce qu'**elle comprend les étapes suivantes
- lors du déploiement des boitiers (5) de communication, association d'un unique mécanisme de communication à chaque boitier (5), cette association étant mémorisée dans une base (15) de données associée au gestionnaire (14) d'action distant, ledit mécanisme de communication étant sélectionné, en fonction de contraintes techniques et opérationnelles, parmi une liste comprenant :
∘ un mécanisme de communication basé sur un tunnel via un proxy ;
∘ un mécanisme de communication basé sur le protocole de contrôle de dispositif de passerelle internet ;
∘ un mécanisme de communication utilisant le protocole extensible de présence et de messagerie ; et,
∘ un mécanisme de communication basé sur le protocole de la traversée simple de datagramme utilisateur à travers une traduction d'adresses réseau ; puis,
- lors de la réception, par le gestionnaire (14) d'action, d'une requête (16) d'action à destination de l'équipement:
∘ identification, dans la base (15) de données, du mécanisme de communication associé au boitier (5) de communication; et,
∘ communication de la requête (16) d'action au boitier (5) de communication via le mécanisme de communication identifié.

2. La méthode de la revendication précédente, dans laquelle les contraintes techniques et opérationnelles prises en compte pour sélectionner le mécanisme de communication associé au boîtier comprennent le niveau de sécurisation du mécanisme, sa complexité de mise en œuvre, sa consommation de ressources, et/ou son niveau de dépendance vis-à-vis du dispositif d'accès intégré,

3. La méthode de la revendication 1 ou 2, comprenant en outre une étape de formatage de la requête (16) reçue selon un format pivot prédéfini.

4. La méthode de l'une quelconque des revendications précédentes, dans laquelle le mécanisme de communication identifié est le mécanisme de communication basé sur un tunnel via un proxy, ou le mécanisme de communication basé sur le protocole de contrôle de dispositif de passerelle internet, la requête d'action étant communiquée au boitier (5) via l'adresse publique du dispositif (25) d'accès intégré.

5. La méthode de l'une quelconque des revendications précédentes, dans laquelle le mécanisme de communication identifié est le mécanisme de communication basé sur un tunnel via un proxy, cette méthode comprenant, en outre, une étape d'établissement d'un tunnel entre le boitier de communication et un serveur (24) proxy associé au gestionnaire (14) d'action distant.

6. La méthode de la revendication précédente, dans laquelle l'étape d'établissement du tunnel comprend une étape d'envoi, par le boitier de communication, d'un message de liaison BIND au serveur (24) proxy pour lui indiquer son identification.

7. La méthode de l'une quelconque des revendications 1 à 4 dans laquelle le mécanisme de communication identifié est le mécanisme de communication basé sur le protocole de contrôle de dispositif de passerelle internet, cette méthode comprenant en outre, une étape d'auto-déclaration du boitier (5) de communication auprès d'un serveur (27) d'auto-configuration associé au gestionnaire d'action distant.

8. La méthode de la revendication 1, 2 ou 3, dans laquelle le mécanisme de communication identifié est le mécanisme de communication utilisant le protocole extensible de présence et de messagerie, ou le mécanisme de communication basé sur le protocole de la traversée simple de datagramme utilisateur à travers une traduction d'adresses réseau, cette méthode comprenant en outre les étapes suivantes
- suite à la réception d'une requête (16) d'action, envoi, par un serveur de réveil associé au gestionnaire d'action distant, d'un message de réveil au boitier de communication ;
- suite à la réception du message du réveil, initiation d'une connexion depuis le boitier de communication vers le gestionnaire d'action distant ;
- récupération, par le boitier de communication, de la requête d'action depuis le gestionnaire d'action distant.

9. La méthode de l'une quelconque des revendications 1, 2, 3 ou 7, dans laquelle le mécanisme de communication identifié est le mécanisme de communication utilisant le protocole extensible de présence et de messagerie, cette méthode comprenant, en outre, une étape d'établissement d'une connexion selon le protocole extensible de présence et de messagerie entre le boitier (5) de communication et un serveur proxy selon le protocole extensible de présence et de messagerie.

10. La méthode de l'une quelconque des revendications précédentes comprenant, en outre, une étape d'envoi, par le boitier (5) de communication et via le mécanisme de communication identifié, d'une mesure d'un capteur associé à l'équipement (1) à une plateforme (4) centrale de données.

11. Produit programme d'ordinateur implémenté sur un support mémoire, susceptible d'être mis en œuvre au sein d'une unité de traitement informatique et comprenant des instructions pour la mise en œuvre d'une méthode selon l'une des revendications 1 à 10.

## Patentansprüche

1. Verfahren zur Kommunikation zwischen einem Remote-Aktionsverwalter (14) und mindestens einer Kommunikationsbox (5), um mit einem oder mehreren Geräten (1) zu interagieren, die mit der Kommunikationsbox (5) verbunden sind, wobei diese Box (5) und dieses Gerät (1) in einem lokalen Netzwerk umfasst sind, wobei die Box (5) mittels einer integrierten Zugriffsvorrichtung (25), die ebenso wie der Remote-Aktionsverwalter (14) über eine öffentliche Adresse verfügt, mit dem Remote-Aktionsverwalter (14) verbunden ist, wobei die Kommunikationsbox (5) über eine private Adresse verfügt, die vom Remote-Aktionsverwalter (14) aus nicht adressierbar ist, wobei dieses Verfahren **dadurch gekennzeichnet ist, dass** es die folgenden Schritte umfasst
- Verknüpfen eines eindeutigen Kommunikationsmechanismus mit jeder Box (5) bei der Einrichtung der Kommunikationsboxen (5), wobei diese Verknüpfung in einer Datenbank (15) gespeichert wird, die mit dem Remote-Aktionsverwalter (14) verknüpft ist, wobei der Kommunikationsmechanismus in Abhängigkeit von technischen und betriebsmäßigen Gegebenheiten aus einer Liste ausgewählt wird, welche umfasst:
-- einen Kommunikationsmechanismus, der auf einem Tunnel über einen Proxy basiert;
-- einen Kommunikationsmechanismus, der auf dem Internet Gateway Device Control Protocol basiert;
-- einen Kommunikationsmechanismus, der das Extensible Messaging and Presence Protocol verwendet; und
-- einen Kommunikationsmechanismus, der auf dem Simple Traversal of User Datagram Protocol Through Network Address Translation basiert; und anschließend
- beim Empfang einer an das Gerät gerichteten Aktionsanfrage (16) durch den Aktionsverwalter (14):
-- Identifizieren des mit der Kommunikationsbox (5) verknüpften Kommunikationsmechanismus in der Datenbank (15); und
-- Kommunizieren der Aktionsanfrage (16) über den identifizierten Kommunikationsmechanismus an die Kommunikationsbox (5).

2. Verfahren nach dem vorstehenden Anspruch, wobei die technischen und betriebsmäßigen Gegebenheiten, die berücksichtigt werden, um den Kommunikationsmechanismus auszuwählen, der mit der Box verknüpft wird, den Sicherungsgrad des Mechanismus, seine Umsetzungskomplexität, seinen Ressourcenverbrauch und/oder seinen Abhängigkeitsgrad gegenüber der integrierten Zugriffsvorrichtung umfassen.

3. Verfahren nach Anspruch 1 oder 2, das weiter einen Schritt des Formatierens der empfangenen Anfrage (16) gemäß einem vordefinierten Pivot-Format umfasst.

4. Verfahren nach einem der vorstehenden Ansprüche, wobei der identifizierte Kommunikationsmechanismus der auf einem Tunnel über einen Proxy basierende Kommunikationsmechanismus oder der auf dem Internet Gateway Device Control Protocol basierende Kommunikationsmechanismus ist, wobei die Aktionsanfrage über die öffentliche Adresse der integrierten Zugriffsvorrichtung (25) an die Box (5) kommuniziert wird.

5. Verfahren nach einem der vorstehenden Ansprüche, wobei der identifizierte Kommunikationsmechanismus der auf einem Tunnel über einen Proxy basierende Kommunikationsmechanismus ist, wobei dieses Verfahren weiter einen Schritt des Aufbauens eines Tunnels zwischen der Kommunikationsbox und einem Proxy-Server (24) umfasst, der mit dem Remote-Aktionsverwalter (14) verknüpft ist.

6. Verfahren nach dem vorstehenden Anspruch, wobei der Schritt des Aufbauens des Tunnels einen Schritt des Sendens einer BIND-Verbindungsnachricht durch die Kommunikationsbox an den Proxy-Server (24) umfasst, um demselben ihre Identifikation anzuzeigen.

7. Verfahren nach einem der Ansprüche 1 bis 4, wobei der identifizierte Kommunikationsmechanismus der auf dem Internet Gateway Device Control Protocol basierende Kommunikationsmechanismus ist, wobei dieses Verfahren weiter einen Schritt der Selbstdeklaration der Kommunikationsbox (5) bei einem Selbstkonfigurations-Server (27) umfasst, der mit dem Remote-Aktionsverwalter verknüpft ist.

8. Verfahren nach Anspruch 1, 2 oder 3, wobei der identifizierte Kommunikationsmechanismus der das Extensible Messaging and Presence Protocol verwendende Kommunikationsmechanismus oder der auf dem Simple Traversal of User Datagram Protocol Through Network Address Translation basierende Kommunikationsmechanismus ist, wobei dieses Verfahren weiter die folgenden Schritte umfasst
- im Anschluss an den Empfang einer Aktionsanfrage (16), Senden einer Wecknachricht durch einen Weckserver, der mit dem Remote-Aktionsverwalter verknüpft ist, an die Kommunikationsbox;
- im Anschluss an den Empfang der Wecknachricht, Initiieren einer Verbindung von der Kommunikationsbox zum Remote-Aktionsverwalter;
- Abrufen der Aktionsanfrage durch die Kommunikationsbox vom Remote-Aktionsverwalter.

9. Verfahren nach einem der Ansprüche 1, 2, 3 oder 7, wobei der identifizierte Kommunikationsmechanismus der das Extensible Messaging and Presence Protocol verwendende Kommunikationsmechanismus ist, wobei dieses Verfahren weiter einen Schritt des Aufbauens einer Verbindung gemäß dem Extensible Messaging and Presence Protocol zwischen der Kommunikationsbox (5) und einem Proxy-Server gemäß dem Extensible Messaging and Presence Protocol umfasst.

10. Verfahren nach einem der vorstehenden Ansprüche, das weiter einen Schritt des Sendens einer Messung eines mit dem Gerät (1) verknüpften Sensors durch die Kommunikationsbox (5) und über den identifizierten Kommunikationsmechanismus an eine zentrale Datenplattform (4) umfasst.

11. Computerprogrammprodukt, das auf einem Speichermedium implementiert ist, das in einer IT-Verarbeitungseinheit umgesetzt werden kann und Anweisungen für die Umsetzung eines Verfahrens nach einem der Ansprüche 1 bis 10 umfasst.

## Claims

1. Method of communication between a remote action manager (14) and at least one communication box (5) so as to interact with one or several items of equipment (1) connected to said communication box (5), this box (5) and this item of equipment (1) being included in a local network, the box (5) being connected to said remote action manager (14) by way of an integrated access device (25) possessing, as well as the remote action manager (14), a public address, the communication box (5) possessing a private address not addressable from the remote action manager (14), this method being **characterized in that** it comprises the following steps
- during the deployment of communication boxes (5), association of a single communication mechanism with each box (5), this association being stored in a database (15) associated with said remote action manager (14), said communication mechanism being chosen, according to technical and operational constraints, from among a list comprising
∘ a communication mechanism based on a tunnel via a proxy;
∘ a communication mechanism based on the Internet gateway device control protocol;
∘ a communication mechanism using the extensible messaging and presence protocol; and
∘ a communication mechanism based on the protocol of the simple traversal of user datagram through network address translation
- during reception, by the action manager (14), of an action request (16) destined for said item of equipment;
∘ identification, in said database (15), of the communication mechanism associated with said communication box (5);
∘ communication of the action request (16) to the communication box (5) via the communication mechanism identified.

2. Method of the preceding claim, in which the technical and operational constraints taken into account for selecting the communication mechanism associated with the box comprise the level of security of the mechanism, its complexity of implementation, its consumption of resources, and/or its level of dependency in relation to the integrated access device.

3. Method of claim 1 or 2, furthermore comprising a step of formatting the request (16) received according to a predefined pivot format.

4. Method of any one of the preceding claims, in which the communication mechanism identified is the communication mechanism based on a tunnel via a proxy, or the communication mechanism based on the Internet gateway device control protocol, the action request being communicated to the box (5) via the public address of the integrated access device (25).

5. Method of any one of the preceding claims, in which the communication mechanism identified is the communication mechanism based on a tunnel via a proxy, this method comprising, furthermore, a step of establishing a tunnel between said communication box and a proxy server (24) associated with the remote action manager (14).

6. Method of the preceding claim, in which the step of establishing the tunnel comprises a step of dispatching, by the communication box, a BIND message to the proxy server (24) to indicate its identification to it.

7. Method of any one of claims 1 to 4, in which the communication mechanism identified is the communication mechanism based on the Internet gateway device control protocol, this method furthermore comprising, a step of self-declaration of the communication box (5) to a self-configuration server (27) associated with said remote action manager.

8. Method of claim 1, 2 or 3, in which the communication mechanism identified is the communication mechanism using the extensible messaging and presence protocol, or the communication mechanism based on the protocol of the simple traversal of user datagram through network address translation, this method furthermore comprising the following steps
- subsequent to the reception of an action request (16), dispatching, by a wakeup server associated with the remote action manager, of a wakeup message to said communication box;
- subsequent to the reception of the message of the wakeup, initiation of a connection from the communication box to the remote action manager;
- retrieval, by the communication box, of the action request from the remote action manager.

9. Method of any one of claims 1, 2, 3 or 7, in which the communication mechanism identified is the communication mechanism using the extensible messaging and presence protocol, this method comprising, furthermore, a step of establishing a connection according to the extensible messaging and presence protocol between the communication box (5) and a proxy server according to the extensible messaging and presence protocol.

10. Method of any one of the preceding claims comprising, furthermore, a step of dispatching, by said communication box (5) and via the communication mechanism identified, a measurement of a sensor associated with said item of equipment (1) to a central data platform (4).

11. Computer program product implemented on a memory medium, able to be implemented within a computer processing unit and comprising instructions for the implementation of a method as claimed in one of claims 1 to 10.
